(19)

**Europäisches Patentamt**
**European Patent Office**
**Office européen des brevets**

(11) **EP 4 542 444 A1**

(12) **EUROPEAN PATENT APPLICATION**

(43) Date of publication:
23.04.2025 Bulletin 2025/17

(21) Application number: 24204585.4

(22) Date of filing: 08.06.2020

(51) International Patent Classification (IPC):
G06N 3/04 $^{(2023.01)}$     G06V 10/25 $^{(2022.01)}$
G06V 10/82 $^{(2022.01)}$     G06V 20/64 $^{(2022.01)}$
G06V 30/24 $^{(2022.01)}$     G06V 40/10 $^{(2022.01)}$

(52) Cooperative Patent Classification (CPC):
G06V 20/647; G06F 18/2413; G06N 3/044;
G06N 3/045; G06N 3/084; G06V 10/25;
G06V 10/764; G06V 10/82; G06V 30/2504;
G06V 40/10; G06N 3/063

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 06.06.2019 CN 201910493331

(62) Document number(s) of the earlier application(s) in
accordance with Art. 76 EPC:
20817904.4 / 3 916 628

(71) Applicant: Huawei Technologies Co., Ltd.
Shenzhen, Guangdong 518129 (CN)

(72) Inventors:
• JIANG, Lihui
  Shenzhen, 518129 (CN)
• QU, Zhan
  Shenzhen, 518129 (CN)

• ZHANG, Wei
  Shenzhen, 518129 (CN)

(74) Representative: Thun, Clemens
Mitscherlich PartmbB
Patent- und Rechtsanwälte
Karlstraße 7
80333 München (DE)

Remarks:
•This application was filed on 04-10-2024 as a
divisional application to the application mentioned
under INID code 62.
•Claims filed after the date of filing of the application /
after the date of receipt of the divisional application
(Rule 68(4) EPC).

(54) **OBJECT RECOGNITION METHOD AND APPARATUS**

(57) This application relates to the field of artificial intelligence, and specifically, to the field of computer vision, and discloses a perception network based on a plurality of headers. The perception network includes a backbone and the plurality of parallel headers. The plurality of parallel headers are connected to the backbone. The backbone is configured to receive an input image, perform convolution processing on the input image, and output feature maps, corresponding to the image, that have different resolutions. Each of the plurality of parallel headers is configured to detect a task object in a task based on the feature maps output by the backbone, and output a 2D box of a region in which the task object is located and confidence corresponding to each 2D box. Each parallel header detects a different task object. The task object is an object that needs to be detected in the task. Higher confidence indicates a higher probability that the task object corresponding to the task exists in the 2D box corresponding to the confidence.

FIG. 5

## Description

### TECHNICAL FIELD

This application relates to the field of artificial intelligence, and in particular, to an object recognition method and apparatus.

### BACKGROUND

Computer vision is an integral part of various intelligent/autonomic systems in various application fields, such as manufacturing industry, inspection, document analysis, medical diagnosis, and military affairs. The computer vision is knowledge about how to use a camera/video camera and a computer to obtain required data and information of a photographed subject. To be vivid, eyes (the camera or the video camera) and a brain (an algorithm) are mounted on the computer to replace human eyes to recognize, track, and measure a target, so that the computer can perceive an environment. The perceiving may be considered as extracting information from a perceptual signal. Therefore, the computer vision may be considered as a science of studying how to enable an artificial system to perform "perceiving" in an image or multi-dimensional data. In conclusion, the computer vision is to replace a visual organ with various imaging systems to obtain input information, and then replace a brain with a computer to process and interpret the input information. An ultimate study objective of the computer vision is to enable the computer to observe and understand the world through vision in a way that human beings do, and to have a capability of autonomously adapting to the environment.

Currently, a visual perception network can implement more functions, including image classification, 2D detection, semantic segmentation (Mask), keypoint detection, linear object detection (for example, lane line or stop line detection in an autonomous driving technology), and drivable area detection. In addition, a visual perception system is cost-effective, non-contact, small-in-size, and information-heavy. With continuous improvement of precision of a visual perception algorithm, the visual perception algorithm becomes a key technology of many artificial intelligence systems today, and is increasingly widely applied. For example, the visual perception algorithm is used in an advanced driving assistant system (ADAS, Advanced Driving Assistant System) or an autonomous driving system (ADS, Autonomous Driving System) to recognize a dynamic obstacle (a person or a vehicle) or a static object (a traffic light, a traffic sign, or a traffic cone-shaped object) on a road surface. Alternatively, the visual perception algorithm is used in a facial beautification function of terminal vision, so that a mask and a keypoint of a human body are recognized to implement downsizing.

Currently, most mainstream visual perception networks focus on one detection task, such as the 2D detection, 3D detection, the semantic segmentation, and the keypoint detection. To implement a plurality of functions, different networks are usually required. Running a plurality of networks at the same time will dramatically increase a calculation amount and power consumption of hardware, reduce a running speed of a model, and make it difficult to implement real-time detection.

### SUMMARY

To reduce a calculation amount and power consumption of hardware and improve a calculation speed of a perception network model, an embodiment of the present invention provides a perception network based on a plurality of headers (Header). The perception network includes a backbone and a plurality of parallel headers. The plurality of parallel headers are connected to the backbone.

The backbone is configured to receive an input image, perform convolution processing on the input image, and output feature maps, corresponding to the image, that have different resolutions.

A parallel header is configured to detect a task object in a task based on the feature maps output by the backbone, and output a 2D box of a region in which the task object is located and confidence corresponding to each 2D box. Each parallel header detects a different task object. The task object is an object that needs to be detected in the task. Higher confidence indicates a higher probability that the object corresponding to the task exists in the 2D box corresponding to the confidence. The parallel header is any one of the plurality of parallel headers, and functions of the parallel headers are similar.

Optionally, each parallel header includes a region proposal network (RPN) module, a region of interest-align (ROI-ALIGN) module, and a region convolutional neural network (RCNN) module. An RPN module of the parallel header is independent of an RPN module of another parallel header. A ROI-ALIGN module of the parallel header is independent of an ROI-ALIGN module of another parallel header. An RCNN module of the parallel header is independent of an RCNN module of another parallel header. For each parallel header:

The RPN module is configured to predict, on one or more feature maps provided by the backbone, the region in which the task object is located, and output a candidate 2D box matching the region;

the ROI-ALIGN module is configured to extract, based on the region predicted by the RPN module, a feature of a region in which the candidate 2D box is located from a feature map provided by the backbone; and

the RCNN module is configured to: perform, through a neural network, convolution processing on the feature of the region in which the candidate 2D box is located, to obtain confidence that the candidate 2D box belongs to each object category, where the object category is an object category in the task corresponding to the parallel header; adjust coordinates of the candidate 2D box of the region through the neural network, so that an adjusted 2D candidate box more matches a shape of an actual object than the candidate 2D box does; and select an adjusted 2D candidate box whose confidence is greater than a preset threshold as a 2D box of the region.

Optionally, the 2D box is a rectangular box.

Optionally, in another aspect of this embodiment of this application, the RPN module is configured to predict, based on an anchor (Anchor) of an object corresponding to a task to which the RNP module belongs, a region in which the task object exists on the one or more feature maps provided by the backbone, to obtain a proposal, and output a candidate 2D box matching the proposal. The anchor is obtained based on a statistical feature of the task object to which the anchor belongs. The statistical feature includes a shape and a size of the object.

Optionally, in another aspect of this embodiment of this application, the perception network further includes at least one or more serial headers. The serial headers are connected to a parallel header.

The serial header is configured to extract, on the one or more feature maps on the backbone through a 2D box of a task object of a task that is provided by the parallel header connected to the serial header and to which the parallel header belongs, a feature of a region in which the 2D box is located, and predict, based on the feature of the region in which the 2D box is located, 3D information, mask information, or keypoint information of the task object of the task to which the parallel header belongs.

Optionally, the RPN module predicts, on the feature maps having different resolutions, regions in which objects having different sizes are located.

Optionally, the RPN module detects a region in which a large object is located on a low-resolution feature, and detects a region in which a small object is located on a high-resolution feature map.

According to another aspect, an embodiment of the present invention further provides an object detection method. The method includes:

receiving an input image;

performing convolution processing on the input image, and outputting feature maps, corresponding to the image, that have different resolutions; and

for different tasks, independently detecting a task object in each task based on the feature maps, and outputting a 2D box of a region in which each task object is located and confidence corresponding to each 2D box, where the task object is an object that needs to be detected in the task, and higher confidence indicates a higher probability that the object corresponding to the task exists in the 2D box corresponding to the confidence.

Optionally, for different tasks, the independently detecting a task object in each task based on the feature maps, and outputting a 2D box of a region in which each task object is located and confidence corresponding to each 2D box includes:

predicting, on one or more feature maps, the region in which the task object is located, and outputting a candidate 2D box matching the region;

extracting, based on the region in which the task object is located, a feature of a region in which the candidate 2D box is located from a feature map;

performing convolution processing on the feature of the region in which the candidate 2D box is located, to obtain confidence that the candidate 2D box belongs to each object category, where the object category is an object category in a task; and

adjusting coordinates of the candidate 2D box of the region through a neural network, so that an adjusted 2D candidate box more matches a shape of an actual object than the candidate 2D box does, and selecting an adjusted 2D candidate box whose confidence is greater than a preset threshold as a 2D box of the region.

Optionally, the 2D box is a rectangular box.

Optionally, the predicting, on one or more feature maps, the region in which the task object is located, and outputting a candidate 2D box matching the region is:

predicting, based on an anchor (Anchor) of an object corresponding to a task, a region in which the task object exists on the one or more feature maps provided by the backbone, to obtain a proposal, and outputting a candidate 2D box matching the proposal, where the anchor is obtained based on a statistical feature of the task object to which the anchor belongs, and the statistical feature includes a shape and a size of the object.

Optionally, the method further includes:
extracting, based on a 2D box of the task object of the task, a feature of a region in which the 2D box is located from the one or more feature maps on the backbone, and predicting, based on the feature of the region in which the 2D box is located, 3D information, mask information, or keypoint information of the task object of the task.

Optionally, detection of a region in which a large object is located is completed on a low-resolution feature, and the RPN module detects a region in which a small object is located on a high-resolution feature map.

According to another aspect, an embodiment of this application provides a method for training a multi-task perception network based on some labeling data. The perception network includes a backbone and a plurality of parallel headers (Header). The method includes:

determining, based on a labeling data type of each image, a task to which each image belongs, where each image is labeled with one or more data types, the plurality of data types are a subset of all data types, and a data type corresponds to a task;
determining, based on the task to which each image belongs, a header that needs to be trained for each image;
calculating a loss value of the header that needs to be trained for each image; and
for each image, performing gradient backhaul through the header that needs to be trained, and adjusting, based on the loss value, parameters of the header that needs to be trained and the backbone.

Optionally, data balancing is performed on images that belong to different tasks.

An embodiment of the present invention further provides an apparatus for training a multi-task perception network based on some labeling data. The perception network includes a backbone and a plurality of parallel headers (Header). The apparatus includes:

a task determining module, configured to determine, based on a labeling data type of each image, a task to which each image belongs, where each image is labeled with one or more data types, the plurality of data types are a subset of all data types, and a data type corresponds to a task;
a header determining module, configured to determine, based on the task to which each image belongs, a header that needs to be trained for each image;
a loss value calculation module, configured to: for each image, calculate a loss value of the header that is determined by the header determining module; and
an adjustment module, configured to: for each image, perform gradient backhaul on the header determined by the header determining module, and adjust, based on the loss value obtained by the loss value calculation module, parameters of the header that needs to be trained and the backbone.

Optionally, the apparatus further includes a data balancing module, configured to perform data balancing on images that belong to different tasks.

An embodiment of the present invention further provides a perception network application system. The perception network application system includes at least one processor, at least one memory, at least one communications interface, and at least one display device. The processor, the memory, the display device, and the communications interface are connected and communicate with each other through a communications bus.

The communications interface is configured to communicate with another device or a communications network.

The memory is configured to store application program code for executing the foregoing solutions, and the processor controls execution. The processor is configured to execute the application program code stored in the memory.

The code stored in the memory 2002 may be executed to perform a multi-header-based object perception method provided in the foregoing, or the method for training a perception network provided in the foregoing embodiment.

The display device is configured to display a to-be-recognized image and information such as 2D information, 3D information, mask information, and keypoint information of an object of interest in the image.

According to the perception network provided in the embodiments of this application, all perception tasks share a same backbone, so that a calculation amount is greatly reduced and a calculation speed of a perception network model is improved. A network structure is easy to expand, so that only one or some headers need to be added to expand a 2D detection type. Each parallel header has independent RPN and RCNN modules, and only an object of a task to which the parallel header belongs needs to be detected. In this way, in a training process, a false injury to an object of another unlabeled task can be avoided.

These aspects or other aspects of this application are clearer and easier to understand in descriptions of the following embodiments.

## BRIEF DESCRIPTION OF DRAWINGS

To describe the technical solutions in the embodiments of the present invention or in the prior art more clearly, the following briefly describes the accompanying drawings for describing the embodiments or the prior art. It is clear that, the accompanying drawings in the following description show merely some embodiments of the present invention, and a person of ordinary skill in the art may derive other drawings from these accompanying drawings without creative efforts.

FIG. 1 is a schematic structural diagram of a system architecture according to an embodiment of this application;

FIG. 2 is a schematic diagram of a CNN feature extraction model according to an embodiment of this application;

FIG. 3 is a schematic diagram of a hardware structure of a chip according to an embodiment of this application;

FIG. 4 is a schematic diagram of an application system framework of a perception network based on a plurality of parallel headers according to an embodiment of this application;

FIG. 5 is a schematic diagram of a structure of a perception network based on a plurality of parallel headers according to an embodiment of this application;

FIG. 6A and FIG. 6B are a schematic diagram of a structure of an ADAS/AD perception system based on a plurality of parallel headers according to an embodiment of this application;

FIG. 7 is a schematic flowchart of basic feature generation according to an embodiment of this application;

FIG. 8 is a schematic diagram of a structure of another RNP layer according to an embodiment of this application;

FIG. 9 is a schematic diagram of an anchor corresponding to an object of another RPN layer according to an embodiment of this application;

FIG. 10 is a schematic diagram of another ROI-ALIGN process according to an embodiment of this application;

FIG. 11 is a schematic diagram of implementation and a structure of another RCNN according to an embodiment of this application;

FIG. 12A and FIG. 12B are a schematic diagram of implementation and a structure of another serial header according to an embodiment of this application;

FIG. 13A and FIG. 13B are a schematic diagram of implementation and a structure of another serial header according to an embodiment of this application;

FIG. 14A and FIG. 14B are a schematic diagram of implementation and a structure of a serial header according to an embodiment of this application;

FIG. 15 is a schematic diagram of a training method for some labeling data according to an embodiment of this application;

FIG. 16 is a schematic diagram of another training method for some labeling data according to an embodiment of this application;

FIG. 17 is a schematic diagram of another training method for some labeling data according to an embodiment of this application;

FIG. 18 is a schematic diagram of another training method for some labeling data according to an embodiment of this application;

FIG. 19 is a schematic diagram of an application of a perception network based on a plurality of parallel headers according to an embodiment of this application;

FIG. 20 is a schematic diagram of an application of a perception network based on a plurality of parallel headers according to an embodiment of this application;

FIG. 21 is a schematic flowchart of a perception method according to an embodiment of this application;

FIG. 22 is a schematic flowchart of 2D detection according to an embodiment of this application;

FIG. 23 is a schematic flowchart of 3D detection of a terminal device according to an embodiment of this application;

FIG. 24 is a schematic flowchart of mask prediction according to an embodiment of this application;

FIG. 25 is a schematic flowchart of prediction of keypoint coordinates according to an embodiment of this application;

FIG. 26 is a schematic flowchart of training a perception network according to an embodiment of this application;

FIG. 27 is a schematic diagram of an implementation structure of a perception network based on a plurality of parallel headers according to an embodiment of this application;

FIG. 28 is a schematic diagram of an implementation structure of a perception network based on a plurality of parallel headers according to an embodiment of this application;

FIG. 29 is a diagram of an apparatus for training a multi-task perception network based on some labeling data according to an embodiment of this application;

FIG. 30 is a schematic flowchart of an object detection method according to an embodiment of this application; and

FIG. 31 is a flowchart of training a multi-task perception network based on some labeling data according to an embodiment of this application.

## DESCRIPTION OF EMBODIMENTS

First, acronyms and abbreviations used in the embodiments of this application are listed as follows:

**Table 1**

| Acronyms and Abbreviations | Full English expression/Standard English term | Chinese expression/Chinese term |
| --- | --- | --- |
| ADAS | Advanced Driving Assistant System | 高级辅助驾驶系统 |
| ADS | Autonomous Driving System | 自动驾驶系统 |
| CNN | Convolutional Neural Networks | 卷积神经网络 |
| FC | Fully Convolutional | 全卷积 |
| 2D | 2 Dimensional | 2维 |
| RPN | Region Proposal Network | 候选区域生成网络 |
| RCNN | Region Convolutional Neural Networks | 区域卷积神经网络 |
| ROI | Region of Interest | 感兴趣区域 |
| NMS | Non Maximum Suppression | 非最大抑制 |
| Deconv | De-Convolutional Layer | 反卷积层 |
| GFlops | Giga Float Operations | 千兆浮点运算 |

It should be noted that, to better comply with term descriptions in the industry, some accompanying drawings in the embodiments of the present invention are described in English, and corresponding Chinese definitions are also provided in the embodiments. The following describes the embodiments of this application with reference to accompanying drawings.

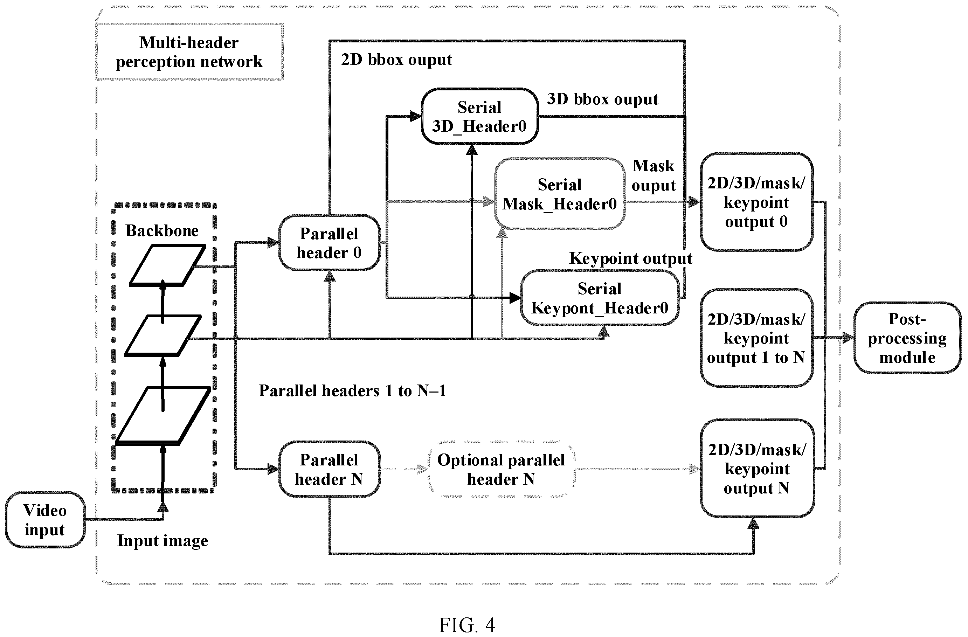

The embodiments of this application are mainly applied to fields in which a plurality of perception tasks need to be completed, such as driving assistance, autonomous driving, and a mobile phone terminal. A framework of an application system of the present invention is shown in FIG. 4. A single image is obtained by performing frame extraction on a video. The image is sent to a multi-header perception network of the present invention, to obtain information such as 2D information, 3D information, mask (mask) information, and keypoint information of an object of interest in the image. These detection results are output to a post-processing module for processing. For example, the detection results are sent to a planning control unit in an autonomous driving system for decision-making, or are sent to a mobile phone terminal for processing according to a beautification algorithm to obtain a beautified image. The following briefly describes two application scenarios: a ADAS/ADS visual perception system and a beautification function of a mobile phone.

Application scenario 1: the ADAS/ADS visual perception system

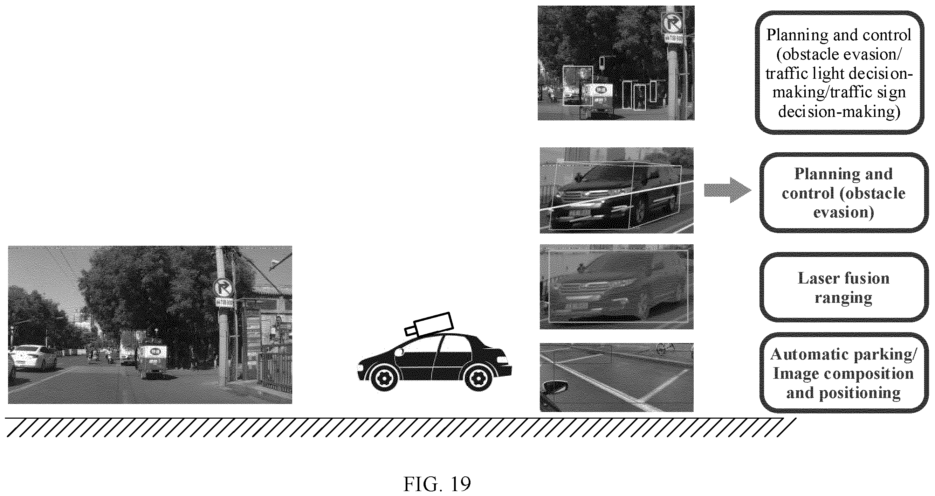

As shown in FIG. 19, in an ADAS or an ADS, a plurality of types of 2D target detection need to be performed in real time, including detection on a dynamic obstacle (a pedestrian (Pedestrian), a cyclist (Cyclist), a tricycle (Tricycle), a car (Car), a truck (Truck), a bus (Bus), a static obstacle (a traffic cone (TrafficCone), a traffic stick (TrafficStick), a fire hydrant (FireHydrant), a motocycle (Motocycle), a bicycle (Bicycle), a traffic sign (TrafficSign), a guide sign (GuideSign), a bill board (Billboard), a red traffic light (TrafficLight_Red)/a yellow traffic light (TrafficLight_Yellow)/a green traffic light (TrafficLight_Green)/a black traffic light (TrafficLight _Black), and a road sign (RoadSign)). In addition, to accurately obtain a region occupied by the dynamic obstacle in 3D space, 3D estimation further needs to be performed on the dynamic obstacle, to output a 3D box. To integrate with data of laser radar, a mask of the dynamic obstacle needs to be obtained to filter out laser point clouds that hit the dynamic obstacle. To accurately locate a parking space, four keypoints of the parking space need to be detected at the same time. To perform image composition positioning, a keypoint of a static target needs to be detected. According to the technical solutions provided in the embodiments of this application, all the foregoing functions can be implemented in one perception network.

Application scenario 2: the beautification function of the mobile phone

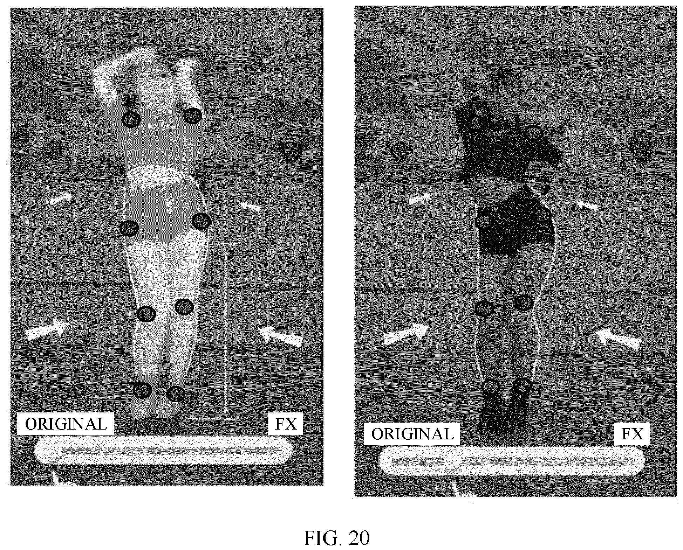

As shown in FIG. 20, in the mobile phone, a mask and a keypoint of a human body are detected through the perception network provided in the embodiments of this application, and a corresponding part of the human body may be zoomed in or out, for example, a waist-shooting operation and a buttock-beautification operation are performed, to output a beautified image.

Application scenario 3: image classification scenario

After obtaining a to-be-categorized image, an object recognition apparatus obtains a category of an object in the to-be-categorized image according to an object recognition method in this application, and then may categorize the to-be-categorized image based on the category of the object in the to-be-categorized image. A photographer takes many photos every day, such as photos of animals, photos of people, and photos of plants. According to the method in this application, the photos can be quickly categorized based on content in the photos, and may be categorized into photos including animals, photos including people, and photos including plants.

When there are a relatively large quantity of images, efficiency of manual categorization is relatively low, and a person is prone to be tired when processing a same thing for a long time. In this case, a categorization result has a great error. However, according to the method in this application, the images can be quickly categorized without an error

Application scenario 4: commodity classification

After obtaining a commodity image, the object recognition apparatus obtains a category of a commodity in the commodity image according to the object recognition method in this application, and then categorizes the commodity based on the category of the commodity. For a variety of commodities in a large shopping mall or a supermarket, the commodities can be quickly categorized according to the object recognition method in this application, to reduce time overheads and labor costs.

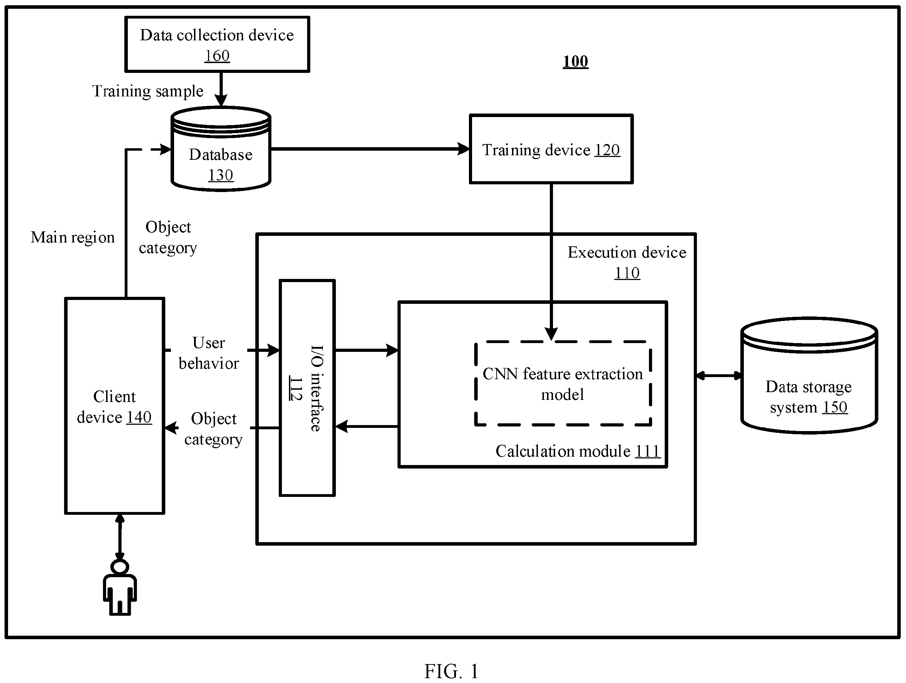

The method and the apparatus provided in the embodiments of this application may be further used to expand a training database. As shown in FIG. 1, an I/O interface 112 of an execution device 120 may send, to a database 130 as a training data pair, an image (for example, an image block or an image that includes an object) processed by the execution device and an object category entered by a user, so that training data maintained in the database 130 is richer. In this way, richer training data is provided for training work of a training device 130.

The following describes the method provided in this application from a model training side and a model application side.

A method for training a CNN feature extraction model provided in the embodiments of this application relates to computer vision processing, and may be specifically applied to data processing methods such as data training, machine learning, and deep learning, to perform symbolic and formal intelligent information modeling, extraction, pre-processing, training and the like on training data (for example, the image or the image block of the object and the category of the object in this application), to finally obtain a trained CNN feature extraction model. In addition, in the embodiments of this application, input data (for example, the image of the object in this application) is input to the trained CNN feature extraction model, to obtain output data (for example, the information such as the 2D information, the 3D information, the mask information, and the keypoint information of the object of interest in the image is obtained in this application).

The embodiments of this application relate to application of a large quantity of neural networks. Therefore, for ease of understanding, related terms and related concepts such as the neural network in the embodiments of this application are first described below.

(1) Object recognition: In object recognition, related methods such as image processing, machine learning, and computer graphics are used to determine a category of an image object.
(2) Neural network

The neural network may include neurons. The neuron may be an operation unit that uses $x_s$ and an intercept 1 as inputs, and an output of the operation unit may be as follows:

$$h_{W,b}(x) = f(W^T x) = f\left(\sum_{s=1}^{n} W_s x_s + b\right) \quad (1\text{-}1)$$

Herein, s = 1, 2, ..., or n, n is a natural number greater than 1, $W_s$ is a weight of $x_s$, and b is bias of the neuron. f is an activation function (activation functions) of the neuron, and the activation function is used to introduce a non-linear feature into the neural network, to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

(3) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at the ith layer is certainly connected to any neuron at the (i + 1)th layer. Although the DNN looks to be complex, the DNN is actually not complex in terms of work at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha()$ is an activation function. At each layer, the output vector $\vec{y}$ is obtained by performing such a simple operation on the input vector $\vec{x}$. Because there are many layers in the DNN, there are also many coefficients $W$ and bias vectors $\vec{b}$. Definitions of these parameters in the DNN are as follows: The coefficient $W$ is used as an example. It is assumed that in a DNN having three layers, a linear coefficient from the fourth neuron at the second layer to the second neuron at the third layer is defined as $W_{24}^3$. The superscript 3 represents a layer at which the coefficient $W$ is located, and the subscript corresponds to an output third-layer index 2 and an input second-layer index 4. In conclusion, a coefficient from the kth neuron at the (L - 1)th layer to the jth neuron at the Lth layer is defined as $W_{jk}^L$. It should be noted that there is no parameter $W$ at the input layer. In the deep neural network, more hidden layers make the network more capable of describing a complex case in the real world.

Theoretically, a model with a larger quantity of parameters indicates higher complexity and a larger "capacity", and indicates that the model can complete a more complex learning task. Training the deep neural network is a process of learning a weight matrix, and a final objective of the training is to obtain a weight matrix of all layers of the trained deep neural network (a weight matrix including vectors $W$ at many layers).

(4) Convolutional neural network

The convolutional neural network (CNN, Convolutional Neuron Network) is a deep neural network having a convolutional structure. The convolutional neural network includes a feature extractor including a convolutional layer and a sub sampling layer. The feature extractor may be considered as a filter. A convolution process may be considered as using a trainable filter to perform convolution on an input image or a convolutional feature plane (feature map). The convolutional layer is a neuron layer that is in the convolutional neural network and at which convolution processing is performed on an input signal. At the convolutional layer of the convolutional neural network, one neuron may be connected only to some adj acent-layer neurons. A convolutional layer usually includes a plurality of feature planes, and each feature plane may include some neurons arranged in a rectangular form. Neurons in a same feature plane share a weight. The shared weight herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, image information obtained through same learning can be used for all locations in the image. At a same convolutional layer, a plurality of convolution kernels may be used to extract different image information. Usually, a larger quantity of convolution kernels indicates richer image information reflected by a convolution operation.

The convolution kernel may be initialized in a form of a random-size matrix. In a process of training the convolutional neural network, the convolution kernel may obtain an appropriate weight through learning. In addition, a direct benefit brought by weight sharing is that connections between layers of the convolutional neural network are reduced and an overfitting risk is lowered.

(5) A recurrent neural network (RNN, Recurrent Neural Networks) is used to process sequence data. In a conventional neural network model, from an input layer to a hidden layer and then to an output layer, the layers are fully connected, and nodes at each layer are not connected. Such a common neural network resolves many difficult problems, but is still incapable of resolving many other problems. For example, if a word in a sentence is to be predicted, a previous word usually needs to be used, because adjacent words in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in the current step, but also on a network status in several previous steps. The learning algorithm is referred to as a back propagation through time (back propagation through time, BPTT) algorithm.

Now that there is a convolutional neural network, why is the recurrent neural network required? A reason is simple. In the convolutional neural network, it is assumed that elements are independent of each other, and an input and an output are also independent, such as a cat and a dog. However, in the real world, many elements are interconnected. For example, stocks change with time. For another example, a person says: I like travelling, and my favorite place is Yunnan. I will go if there is a chance. If there is bank filling, people should know that "Yunnan" will be filled in the blank. A reason is that the people can deduce the answer based on content of the context. However, how can a machine do this? The RNN emerges. The RNN is intended to make the machine capable of memorizing like a human. Therefore, an output of the RNN needs to depend on current input information and historical memorized information.

(6) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed until the deep neural network can predict the target value that is actually expected or a value that is very close to the target value that is actually expected. Therefore, "how to obtain, through comparison, a difference between a predicted value and a target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(7) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

The following describes a system architecture provided in the embodiments of this application.

Referring to FIG. 1, an embodiment of this application provides a system architecture 110. As shown in the system architecture 110, a data collection device 170 is configured to collect training data. In this embodiment of this application, the training data includes an image or an image block of an object and a category of the object. The data collection device 170 stores the training data in a database 130. A training device 130 performs training based on training data maintained in the database 130 to obtain a CNN feature extraction model 101 (explanation: The model 101 herein is the foregoing described model obtained through training in the training phase, and may be a perception network or the like used for feature extraction). The following describes in more detail, through Embodiment 1, how the training device 130 obtains the CNN feature extraction model 101 based on the training data. The CNN feature extraction model 101 can be used to implement the perception network provided in this embodiment of this application. To be specific, a to-be-recognized image or image block after related preprocessing is input to the CNN feature extraction model 101, to obtain information such as 2D information, 3D information, mask information, and keypoint information of an object of interest in the to-be-recognized image or image block. The CNN feature extraction model 101 in this embodiment of this application may be specifically a CNN convolutional neural network. It should be noted that, in actual application, the training data maintained in the database 130 is not necessarily all collected by the data collection device 170, and may be alternatively received from another device. In addition, it should be noted that the training device 130 does not necessarily perform training completely based on the training data maintained in the database 130 to obtain the CNN feature extraction model 101, but may obtain training data from a cloud or another place to perform model training. The foregoing description shall not be construed as a limitation on this embodiment of this application.

The CNN feature extraction model 101 obtained, through training, by the training device 130 may be applied to different systems or devices, for example, applied to the execution device 120 shown in FIG. 1. The execution device 120 may be a terminal, such as a mobile phone terminal, a tablet computer, a notebook computer, an AR/VR terminal, or a vehicle-mounted terminal, or may be a server, a cloud, or the like. In FIG. 1, the execution device 120 is provided with an I/O interface 112, configured to exchange data with an external device. A user may input data to the I/O interface 112 through a client device 150. The input data in this embodiment of this application may include a to-be-recognized image or image block or picture.

In a process in which the execution device 120 pre-processes the input data, or in a process in which a calculation module 111 of the execution device 120 performs related processing such as calculation or the like (for example, implements a function of the perception network in this application), the execution device 120 may invoke data, code, and the like in a data storage system 160 for corresponding processing, and may further store, in the data storage system 160, data, an instruction, and the like that are obtained through the corresponding processing.

Finally, the I/O interface 112 returns a processing result, for example, the foregoing obtained image or image block, or the information such as the 2D information, the 3D information, the mask information, and the keypoint information of the object of interest in the image, to the client device 150, so that the processing result is provided to the user.

Optionally, the client device 150 may be a planning control unit in an autonomous driving system or a beautification algorithm module in the mobile phone terminal.

It should be noted that the training device 130 may generate corresponding target models/rules 101 for different targets or different tasks based on different training data. The corresponding target models/rules 101 may be used to implement the foregoing targets or complete the foregoing tasks, to provide a desired result for the user

In a case shown in FIG. 1, the user may manually provide the input data. The manual provision may be performed on a screen provided by the I/O interface 112. In another case, the client device 150 may automatically send the input data to the I/O interface 112. If it is required that the client device 150 needs to obtain authorization from the user to automatically send the input data, the user may set a corresponding permission on the client device 150. The user may view, on the client device 150, a result output by the execution device 120. Specifically, the result may be presented in a form of displaying, a sound, an action, or the like. The client device 150 may also be used as a data collection end to collect the input data that is input to the I/O interface 112 and an output result that is output from the I/O interface 112 in the figure, use the input data and the output result as new sample data, and store the new sample data in the database 130. Certainly, the client device 150 may alternatively not perform collection, but the I/O interface 112 directly stores, in the database 130 as the new sample data, the input data that is input to the I/O interface 112 and the output result that is output from the I/O interface 112 in the figure.

It should be noted that FIG. 1 is merely a schematic diagram of the system architecture provided in this embodiment of the present invention. A location relationship between the devices, the components, the modules, and the like shown in the figure does not constitute any limitation. For example, in FIG. 1, the data storage system 160 is an external memory relative to the execution device 120, but in another case, the data storage system 160 may be alternatively disposed in the execution device 120.

As shown in FIG. 1, the CNN feature extraction model 101 is obtained through training by the training device 130. In this embodiment of this application, the CNN feature extraction model 101 may be a CNN convolutional neural network, or may be a perception network that is based on a plurality of headers and that is to be described in the following embodiments.

As described in the foregoing basic concept, the convolutional neural network is a deep neural network having a convolutional structure, and is a deep learning (deep learning) architecture. The deep learning architecture is learning of a plurality of layers at different abstract levels according to a machine learning algorithm. As a deep learning architecture, the CNN is a feed-forward (feed-forward) artificial neural network. Neurons in the feed-forward artificial neural network may respond to an input image.

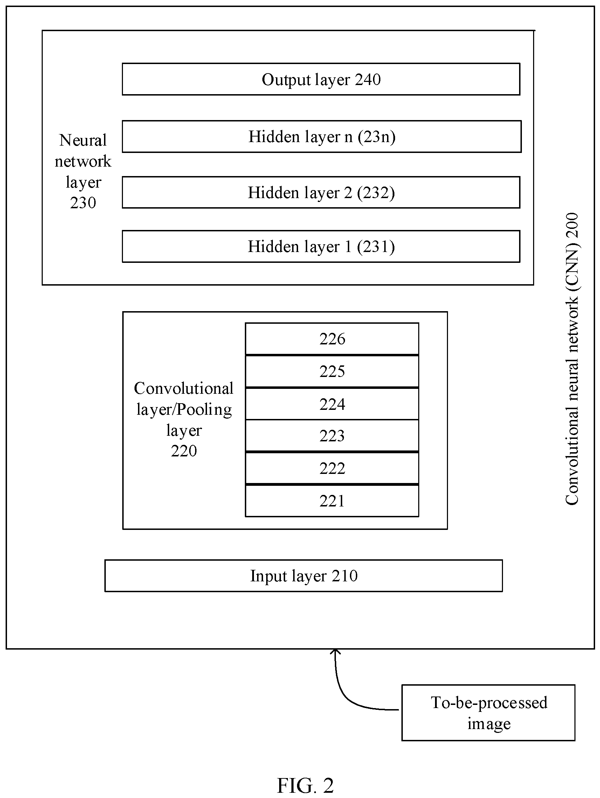

As shown in FIG. 2, a convolutional neural network (CNN) 210 may include an input layer 220, a convolutional layer/pooling layer 230 (where the pooling layer is optional), and a neural network layer 230.

Convolutional layer/pooling layer 230:

Convolutional layer:

As shown in FIG. 2, the convolutional layer/pooling layer 230 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. To be specific, an output of a convolutional layer may be used as an input of a subsequent pooling layer, or may be used as an input of another convolutional layer to continue to perform a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unneeded noise in the image. Sizes of the plurality of weight matrices (rows x columns) are the same. Sizes of feature maps extracted from the plurality of weight matrices with the same size are also the same, and then the plurality of extracted feature maps with the same size are combined to form an output of the convolution operation.

Weight values in these weight matrices need to be obtained through massive training in actual application. Each weight matrix formed by using the weight values obtained through training may be used to extract information from the input image, to enable the convolutional neural network 210 to perform correct prediction.

When the convolutional neural network 210 has a plurality of convolutional layers, a relatively large quantity of general features are usually extracted at an initial convolutional layer (for example, 221). The general feature may also be referred to as a low-level feature. As a depth of the convolutional neural network 210 increases, a feature extracted at a subsequent convolutional layer (for example, 226) is more complex, for example, a high-level semantic feature. A feature with higher semantics is more applicable to a to-be-resolved problem.

Pooling layer:

A quantity of training parameters often needs to be reduced. Therefore, the pooling layer often needs to be periodically introduced after the convolutional layer. For the layers 221 to 226 shown in 230 in FIG. 2, one convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a relatively small size. The average pooling operator may be used to calculate pixel values in the image in a specific range, to generate an average value. The average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer

Neural network layer 230:

After processing performed at the convolutional layer/pooling layer 230, the convolutional neural network 210 is not ready to output required output information. Because as described above, at the convolutional layer/pooling layer 230, only a feature is extracted, and parameters resulting from the input image are reduced. However, to generate final output information (required class information or other related information), the convolutional neural network 210 needs to use the neural network layer 230 to generate an output of one required type or a group of required types. Therefore, the neural network layer 230 may include a plurality of hidden layers (231, 232, ..., and 23n shown in FIG. 2) and an output layer 240. Parameters included in the plurality of hidden layers may be obtained through pre-training based on related training data of a specific task type. For example, the task type may include image recognition, image categorization, and super-resolution image reconstruction.

At the neural network layer 230, the plurality of hidden layers are followed by the output layer 240, namely, the last layer of the entire convolutional neural network 210. The output layer 240 has a loss function similar to categorization cross entropy, and the loss function is specifically used to calculate a prediction error. Once forward propagation (propagation in a direction from 220 to 240, as shown in FIG. 2) of the entire convolutional neural network 210 is completed, back propagation (propagation in a direction from 240 to 220, as shown in FIG. 2) is started to update a weight value and a deviation of each layer mentioned above, to reduce a loss of the convolutional neural network 210 and an error between a result output by the convolutional neural network 210 through the output layer and an ideal result.

It should be noted that the convolutional neural network 210 shown in FIG. 2 is merely used as an example of the convolutional neural network. The convolutional neural network may alternatively exist in a form of another network model in specific application.

The following describes a hardware structure of a chip according to an embodiment of this application.

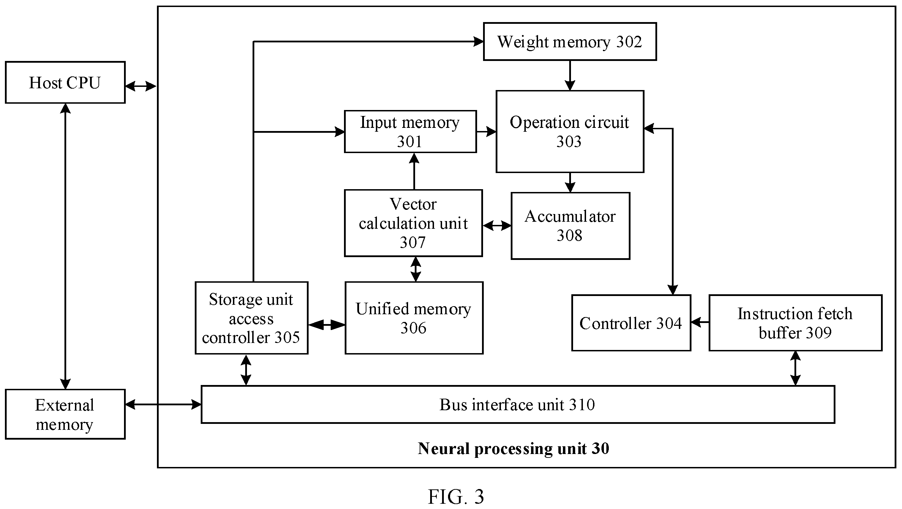

FIG. 3 shows a hardware structure of a chip provided in an embodiment of the present invention. The chip includes a neural processing unit 30. The chip may be disposed in the execution device 120 shown in FIG. 1, to complete calculation work of the calculation module 111. The chip may be alternatively disposed in the training device 130 shown in FIG. 1, to complete training work of the training device 130 and output the target model/rule 101. All algorithms of the layers in the convolutional neural network shown in FIG. 2 may be implemented in the chip shown in FIG. 3.

For the neural processing unit NPU 30, the NPU serves as a coprocessor, and is mounted onto a host CPU (Host CPU). The host CPU assigns a task. A core part of the NPU is an operation circuit 303, and a controller 304 controls the operation circuit 303 to extract data in a memory (a weight memory or an input memory) and perform an operation.

In some implementations, the operation circuit 303 includes a plurality of process engines (Process Engine, PE) inside. In some implementations, the operation circuit 303 is a two-dimensional systolic array. The operation circuit 303 may be alternatively a one-dimensional systolic array or another electronic circuit that can perform mathematical operations such as multiplication and addition. In some implementations, the operation circuit 303 is a general-purpose matrix processor.

For example, it is assumed that there are an input matrix A, a weight matrix B, and an output matrix C. The operation circuit fetches data corresponding to the matrix B from a weight memory 302 and buffers the data on each PE of the operation circuit. The operation circuit fetches data of the matrix A from an input memory 301, to perform a matrix operation on the matrix B, and stores an obtained partial result or an obtained final result of the matrix into an accumulator (accumulator) 308.

A vector calculation unit 307 may perform further processing such as vector multiplication, vector addition, an exponent operation, a logarithm operation, or value comparison on an output of the operation circuit. For example, the vector calculation unit 307 may be configured to perform network calculation, such as pooling (Pooling), batch normalization (Batch Normalization), or local response normalization (Local Response Normalization) at a non-convolutional/-non-FC layer in a neural network.

In some implementations, the vector calculation unit 307 can store a processed output vector in a unified cache 306. For example, the vector calculation unit 307 may apply a non-linear function to an output of the operation circuit 303, for example, to a vector of an accumulated value, so as to generate an activation value. In some implementations, the vector calculation unit 307 generates a normalized value, a combined value, or both. In some implementations, the processed output vector can be used as an activation input of the operation circuit 303, for example, can be used at a subsequent layer in the neural network.

Operations of the perception network provided in the embodiments of this application may be performed by 303 or 307.

The unified memory 306 is configured to store input data and output data.

For weight data, a direct memory access controller (Direct Memory Access Controller, DMAC) 305 transfers input data in an external memory to the input memory 301 and/or the unified memory 306, stores weight data in the external memory into the weight memory 302, and stores data in the unified memory 306 into the external memory.

A bus interface unit (Bus Interface Unit, BIU) 310 is configured to implement interaction among the host CPU, the DMAC, and an instruction fetch buffer 309 through a bus.

The instruction fetch buffer (instruction fetch buffer) 309 connected to the controller 304 is configured to store an instruction to be used by the controller 304.

The controller 304 is configured to invoke the instruction buffered in the instruction fetch buffer 309, to control a working process of the operation accelerator.

Optionally, in this application, the input data herein is an image, and the output data is information such as 2D information, 3D information, mask information, and keypoint information of an object of interest in the image.

Usually, the unified memory 306, the input memory 301, the weight memory 302, and the instruction fetch buffer 309 each are an on-chip (On-Chip) memory. The external memory is a memory outside the NPU. The external memory may be a double data rate synchronous dynamic random access memory (Double Data Rate Synchronous Dynamic Random Access Memory, DDR SDRAM for short), a high bandwidth memory (High Bandwidth Memory, HBM), or another readable and writable memory.

Program algorithms in FIG. 1 and FIG. 2 are jointly completed by the host CPU and the NPU.

Operations at various layers in the convolutional neural network shown in FIG. 2 may be performed by the operation circuit 303 or the vector calculation unit 307.

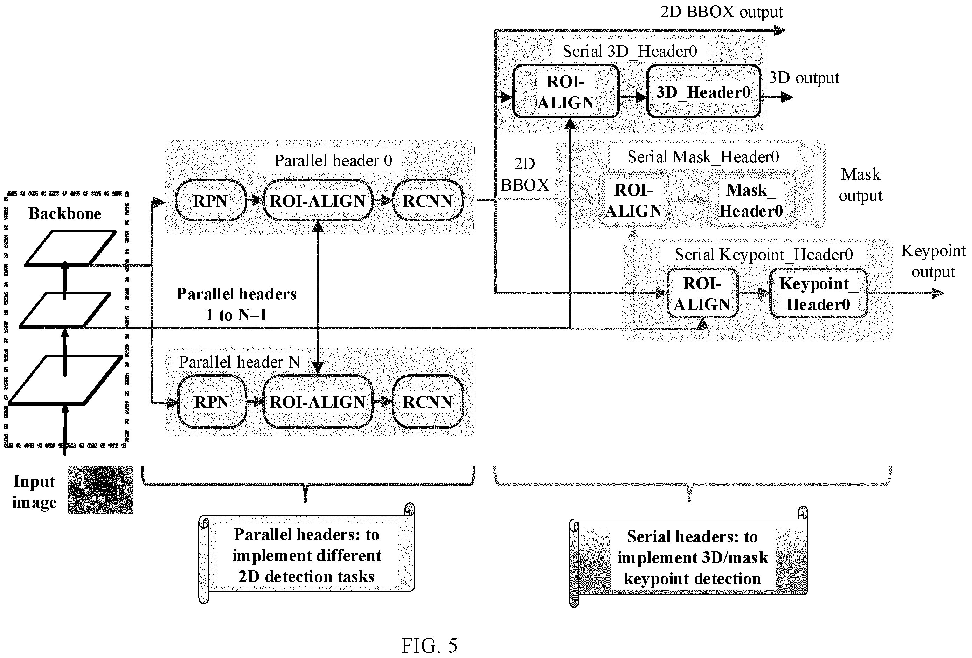

FIG. 5 is a schematic diagram of a structure of a multi-header perception network according to an embodiment of this application. As shown in FIG. 5, the perception network mainly includes two parts: a backbone (Backbone) 401 and a plurality of parallel headers (Header 0 to Header N).

The backbone 401 is configured to receive an input image, perform convolution processing on the input image, and output feature maps, corresponding to the image, that have different resolutions. In other words, the backbone 401 outputs feature maps, corresponding to the image, that have different sizes.

In other words, the backbone extracts basic features to provide a corresponding feature for subsequent detection.

Any parallel header is configured to detect a task object in a task based on the feature maps output by the backbone, and output a 2D box of a region in which the task object is located and confidence corresponding to each 2D box. Each parallel header detects a different task object. The task object is an object that needs to be detected in the task. Higher confidence indicates a higher probability that the object corresponding to the task exists in the 2D box corresponding to the confidence.

In other words, the parallel headers complete different 2D detection tasks. For example, a parallel header 0 completes vehicle detection and outputs 2D boxes and confidence of Car/Truck/Bus. A parallel header 1 completes person detection, and outputs 2D boxes and confidence of Pedestrian/Cyclist/Tricycle. A parallel header 2 completes traffic light detection and outputs 2D boxes and confidence of Red_Trafficlight/Green_Trafficlight/Yellow_TrafficLight/-Black_TrafficLight.

Optionally, as shown in FIG. 5, the perception network may further include a plurality of serial headers, and the perception network further includes at least one or more serial headers. The serial headers are connected to one parallel header. It should be emphasized herein that although the plurality of serial headers are drawn in FIG. 5 for better presentation, actually, the serial headers are not mandatory. In a scenario in which only a 2D box needs to be detected, the serial headers are not necessary.

The serial header is configured to extract, on one or more feature maps on the backbone through a 2D box of a task object of a task that is provided by the parallel header connected to the serial header and to which the parallel header belongs, a feature of a region in which the 2D box is located, and predict, based on the feature of the region in which the 2D box is located, 3D information, mask information, or keypoint information of the task object of the task to which the parallel header belongs.

Optionally, the serial headers are serially connected to the parallel header, and complete 3D/mask/keypoint detection of the object in the 2D box based on the 2D box of the task being detected.

For example, serial 3D_Header0 estimates a direction, a centroid, a length, a width, and a height of a vehicle, to output a 3D box of the vehicle. Serial Mask_Header0 predicts a fine mask of the vehicle, to segment the vehicle. Serial Keypoint_Header0 estimates a keypoint of the vehicle.

The serial headers are not mandatory. For some tasks in which 3D/mask/keypoint detection are not required, the serial headers do not need to be serially connected. For example, for the traffic light detection, only the 2D box needs to be detected, so that the serial headers do not need to be serially connected. In addition, for some tasks, one or more serial headers may be serially connected based on a specific task requirement. For example, for parking lot (Parkinglot) detection, in addition to a 2D box, a keypoint of a parking space is also required. Therefore, only one serial Keypoint_Header needs to be serially connected in this task, and 3D and mask headers are not required.

The following describes each module in detail.

Backbone: The backbone performs a series of convolution processing on the input image to obtain feature maps (feature map) with different scales. These feature maps provide a basic feature for a subsequent detection module. The backbone may be in a plurality of forms, for example, a VGG (Visual Geometry Group, visual geometry group), a Resnet (Residual Neural Network, residual neural network), or an Inception-net (a core structure of GoogLeNet).

Parallel header: The parallel header mainly detects a 2D box of a task based on the basic features provided by the backbone and outputs a 2D box of an object in the task and corresponding confidence.

Optionally, a parallel header of each task includes three modules: an RPN, an ROI-ALIGN, and an RCNN.

The RPN module is configured to predict, on the one or more feature maps provided by the backbone, the region in which the task object is located, and output a candidate 2D box matching the region.

Alternatively, it may be understood as follows: The RPN is short for region proposal network (Region Proposal Network). The RPN predicts, on the one or more feature maps on the backbone, regions in which the task object may exist, and provides boxes of these regions. These regions are called proposals (Proposal).

For example, when the parallel header 0 is responsible for the vehicle detection, an RPN layer of the parallel header 0 predicts a candidate box in which the vehicle may exist. When the parallel header 1 is responsible for the person detection, an RPN layer of the parallel header 1 predicts a candidate box in which a person may exist. Certainly, these proposals are not accurate. On one hand, the proposals do not necessarily include the object of the task. On the other hand, these boxes are not compact.

The ROI-ALIGN module is configured to extract, based on the region predicted by the RPN module, a feature of a region in which the candidate 2D box is located from a feature map provided by the backbone.

To be specific, the ROI-ALIGN module mainly extracts a feature of a region in which each proposal is located from a feature map on the backbone based on the proposals provided by the RPN module, and resizes the feature to a fixed size to obtain a feature of each proposal. It may be understood that a feature extraction method used by the ROI-ALIGN module may include but is not limited to ROI-POOLING (region of interest pooling)/ROI-ALIGN (region of interest extraction)/PS-ROIPOOLING (position-sensitive region of interest pooling)/PS-ROIALIGN (position-sensitive region of interest extraction).

The RCNN module is configured to: perform, through a neural network, convolution processing on the feature of the region in which the candidate 2D box is located, to obtain confidence that the candidate 2D box belongs to each object category, where the object category is an object category in the task corresponding to the parallel header; adjust coordinates of the candidate 2D box of the region through the neural network, so that an adjusted 2D candidate box more matches a shape of an actual object than the candidate 2D box does; and select an adjusted 2D candidate box whose confidence is greater than a preset threshold as a 2D box of the region.

In other words, the RCNN module mainly refines the feature, of each proposal, that is extracted by the ROI-ALIGN module, to obtain confidence that each proposal belongs to each category (for example, for a vehicle task, four scores of Background/Car/TruckBus are provided). In addition, coordinates of a 2D box of the proposal are adjusted to output a more compact 2D box. These 2D boxes are combined through NMS (Non Maximum Suppression, non-maximum suppression) and output as a final 2D box.

As described above, in some actual application scenarios, the perception network may further include the serial headers. The serial headers are mainly serially connected to the parallel header and further perform 3D/mask/keypoint detection based on the 2D box being detected. Therefore, there are three types of serial headers:

Serial 3D header: The serial 3D header extracts, through the ROI-ALIGN module based on 2D boxes provided by a front-end parallel header (in this case, the 2D boxes are accurate and compact), features of regions in which the 2D boxes are located from a feature map on the Backbone. Then, a small network (3D_Header in FIG. 5) is used to regress coordinates of a centroid, an orientation angle, a length, a width, and a height of an object in the 2D box, to obtain complete 3D information.

Serial mask header: The serial mask header extracts, through the ROI-ALIGN module based on the 2D boxes provided by the front-end parallel header (in this case, the 2D boxes are accurate and compact), the features of the regions in which the 2D boxes are located from a feature map on the backbone. Then, a small network (Mask_Header in FIG. 5) is used to regress a mask of the object in the 2D box, to segment the object.

Serial keypoint header: The serial keypoint header extracts, through the ROI-ALIGN module based on the 2D boxes provided by the front-end parallel header (in this case, the 2D boxes are accurate and compact), the features of the regions in which the 2D boxes are located from a feature map on the backbone. Then, a small network (Keypoint_Header in FIG. 5) is used to regress to coordinates of a keypoint of the object in the 2D box.

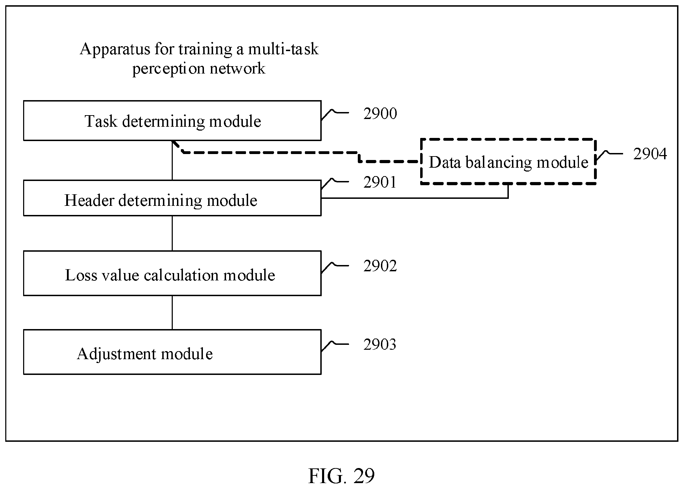

Optionally, as shown in FIG. 29, an embodiment of the present invention further provides an apparatus for training a multi-task perception network based on some labeling data. The perception network includes a backbone and a plurality of parallel headers (Header). A structure of the perception network is described in detail in the foregoing embodiments, and details are not described herein again. The apparatus includes:

a task determining module 2900, configured to determine, based on a labeling data type of each image, a task to which each image belongs, where each image is labeled with one or more data types, the plurality of data types are a subset of all data types, and a data type corresponds to a task;

a header determining module 2901, configured to determine, based on the task that is determined by the task determining module 2900 and to which each image belongs, a header that needs to be trained for each image;

a loss value calculation module 2902, configured to: for each image, calculate a loss value of the header that is determined by the header determining module 2901; and

an adjustment module 2903, configured to: for each image, perform gradient backhaul on the header determined by the header determining module 2901, and adjust, based on the loss value obtained by the loss value calculation module 2902, parameters of the header that needs to be trained and the backbone.

Optionally, in an embodiment, as shown in a dashed box in FIG. 29, the apparatus may further include:
a data balancing module 2904, configured to perform data balancing on images that belong to different tasks.

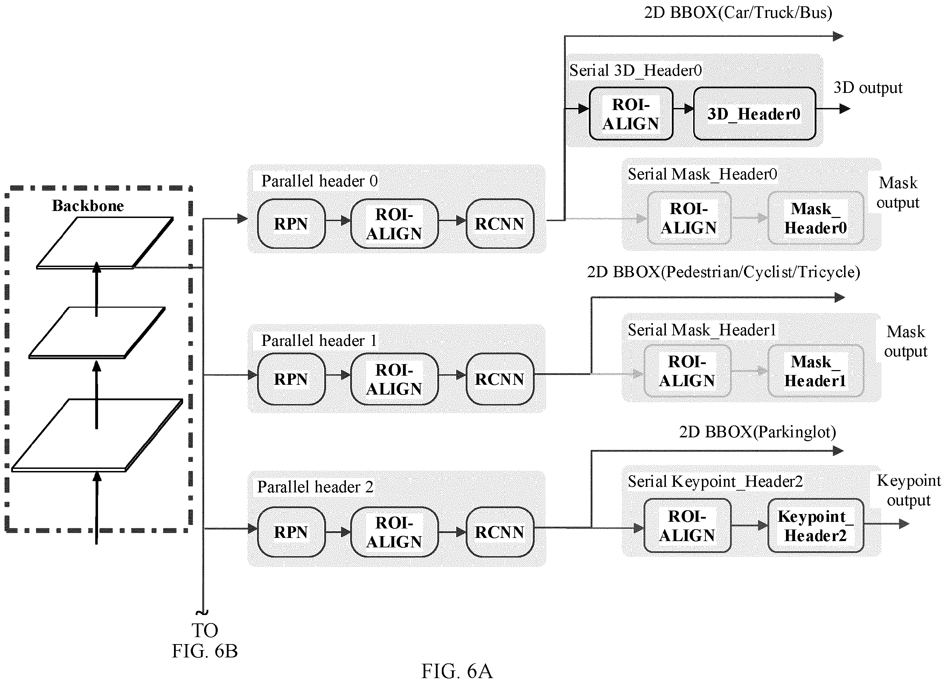

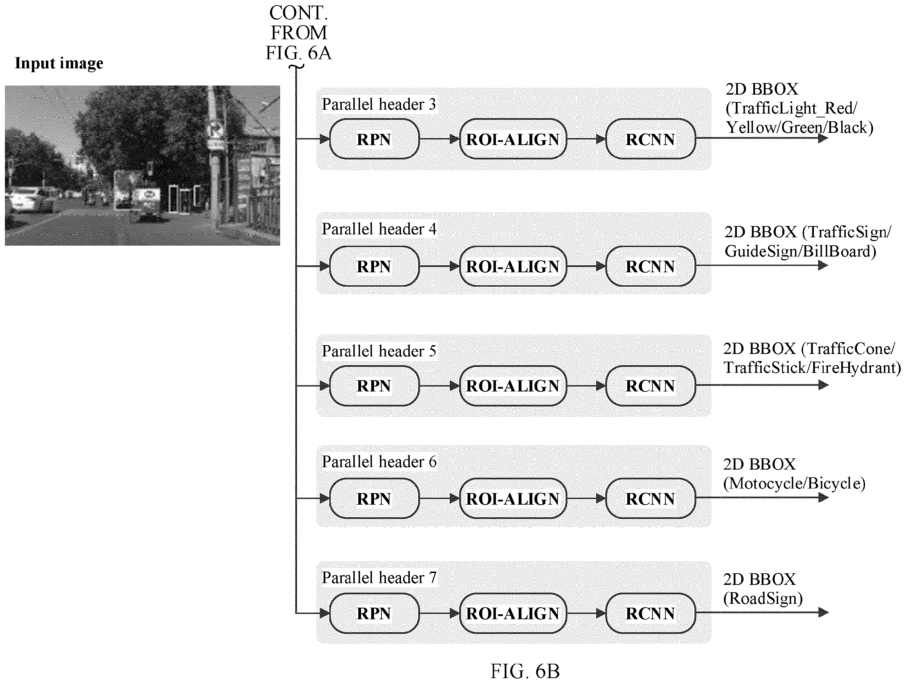

As shown in FIG. 6A and FIG. 6B, the following uses an ADAS/AD visual perception system as an example to describe an embodiment of the present invention in detail.

In the ADAS/AD visual perception system, a plurality of types of 2D target detection need to be performed in real time, including detection on dynamic obstacles (Pedestrian, Cyclist, Tricycle, Car, Truck, and Bus), static obstacles (TrafficCone, TrafficStick, FireHydrant, Motocycle, and Bicycle), and traffic signs (TrafficSign, GuideSign, and Billboard).

In addition, to accurately obtain a region occupied by a vehicle in 3D space, 3D estimation further needs to be performed on the dynamic obstacle, to output a 3D box. To integrate with data of laser radar, a mask of the dynamic obstacle needs to be obtained to filter out laser point clouds that hit the dynamic obstacle. To accurately locate a parking space, four keypoints of the parking space need to be detected at the same time. According to the technical solution provided in this embodiment, all the foregoing functions can be implemented in one network. The following describes this embodiment in detail.

1. Task division of each header and an overall block diagram of the network

According to a similarity of objects that need to be detected and richness and scarcity of training samples, in this embodiment, 20 types of objects that need to be detected are classified into eight major categories, as shown in Table 2.

**Table 2 Object categories that need to be detected by each header and extended functions of each header**

| Header | Categories of detected 2D objects | 3D | Mask | Keypoint |
|--------|-----------------------------------|-----|------|----------|
| 0 | Car/Truck/Bus | Yes | Yes | No |
| 1 | Pedestrian/Cyclist/Tricycle | No | Yes | No |
| 2 | Parkinglot | No | No | Yes |
| 3 | TrafficLight_Red/Yellow/Green/Black | No | No | No |
| 4 | TrafficSign/GuideSign/BillBoard | No | No | No |
| 5 | TrafficCone/TrafficStick/FireHydrant | No | No | No |
| 6 | Motocycle/Bicycle | No | No | No |
| 7 | RoadSign | No | No | No |

Based on a service requirement, in addition to 2D vehicle detection, the header 0 further needs to complete 3D and mask detection; in addition to 2D person detection, the header 1 further needs to complete mask detection; and in addition to detection of a 2D box of the parking space, the header 2 further needs to detect a keypoint of the parking space.

It should be noted that the task division in Table 2 is only an example in this embodiment, and different task division may be performed in another embodiment, which is not limited to the task division in Table 2.

According to the task division in Table 2, an overall structure of a perception network in this embodiment is shown in FIG. 6A and FIG. 6B.

The perception network mainly includes three parts: a backbone, a parallel header, and a serial header It should be noted that, as described in the foregoing embodiment, the serial header is not mandatory. A reason has been described in the foregoing embodiment, and details are not described herein again. Eight parallel headers complete 2D detection of eight categories in Table 1 at the same time, and several serial headers are serially connected behind the headers 0 to 2 to further complete 3D/mask/keypoint detection. It can be learned from FIG. 6A and FIG. 6B that, in the present invention, a header may be flexibly added or deleted based on the service requirement, to implement different function configurations.

2. Basic feature generation

A basic feature generation process is implemented by the backbone in FIG. 6A and FIG. 6B. The backbone performs convolution processing on an input image to generate several convolution feature maps with different scales. Each feature map is a matrix of H*W*C, where H is a height of the feature map, W is a width of the feature map, and C is a quantity of channels of the feature map.

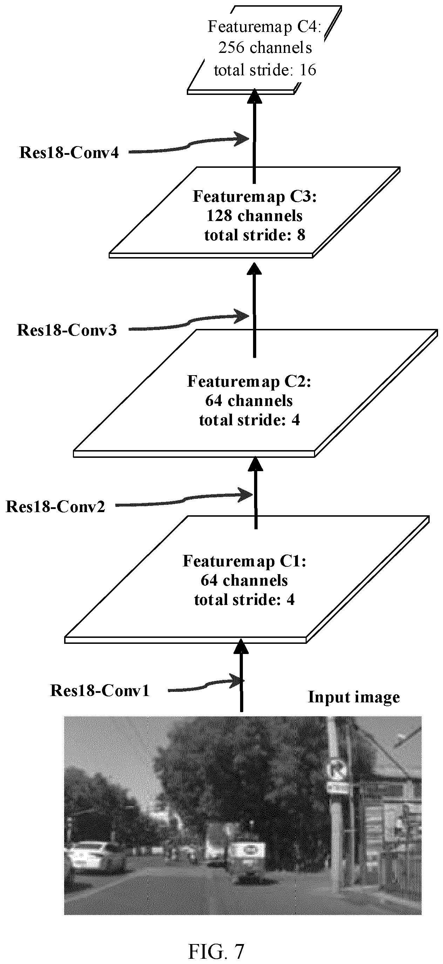

The backbone may use a plurality of existing convolutional network frameworks, such as a VGG16, a Resnet50, and an Inception-Net. The following uses a Resnetl8 as the backbone to describe the basic feature generation process. The process is shown in FIG. 7.

It is assumed that a resolution of the input image is H*W*3 (a height is H, a width is W, and a quantity of channels is 3, in other words, there are R, B, and G channels). A first convolution module (Res18-Conv1 in the figure, which includes several convolutional layers; and subsequent convolution modules are similar) of the Resnetl8 performs a convolution operation on the input image to generate a Featuremap C1 (a feature map). The feature map is downsampled twice relative to the input image, and the quantity of channels is expanded to 64. Therefore, a resolution of C1 is H/4*W/4*64. A second convolution module (Res18-Conv2) of the Resnetl8 performs a convolution operation on C1 to obtain a Featuremap C2. A resolution of the feature map is the same as that of C1. C2 is further processed by a third convolution module (Resl8-Conv3) of the Resnetl8 to generate a Featuremap C3. The feature map is further downsampled relative to C2. The quantity of channels is doubled, and a resolution of C3 is H/8*W/8*128. Finally, C3 is processed by Res18-Conv4 to generate a Featuremap C4. A resolution of C4 is H/16*W/16*256.

It can be learned from FIG. 7 that the Resnetl8 performs convolution processing on the input image at a plurality of levels, to obtain feature maps with different scales: C1, C2, C3, and C4. A width and a height of a bottom-layer feature map are large, and a quantity of channels is small. The bottom-layer feature map mainly includes lower-level features (such as an image edge and a texture feature) of the image. A width and a height of an upper-layer feature map are small, and a quantity of channels is large. The upper-layer feature map mainly includes high-level features (such as a shape feature and an object feature) of the image. In a subsequent 2D detection process, prediction is further performed based on these feature maps.

3. 2D proposal prediction process

The 2D proposal prediction process is implemented by an RPN module of each parallel header in FIG. 6A and FIG. 6B. The RPN module predicts, based on the feature maps (C1/C2/C3/C4) provided by the backbone, regions in which a task object may exist, and provides candidate boxes (which may also be referred to as proposals, Proposal) of these regions. In this embodiment, the parallel header 0 is responsible for the vehicle detection, so that an RPN layer of the parallel header 0 predicts a candidate box in which the vehicle may exist. The parallel header 1 is responsible for the person detection, so that an RPN layer of the parallel header 1 predicts a candidate box in which a person may exist. Others are similar, and details are not described again.

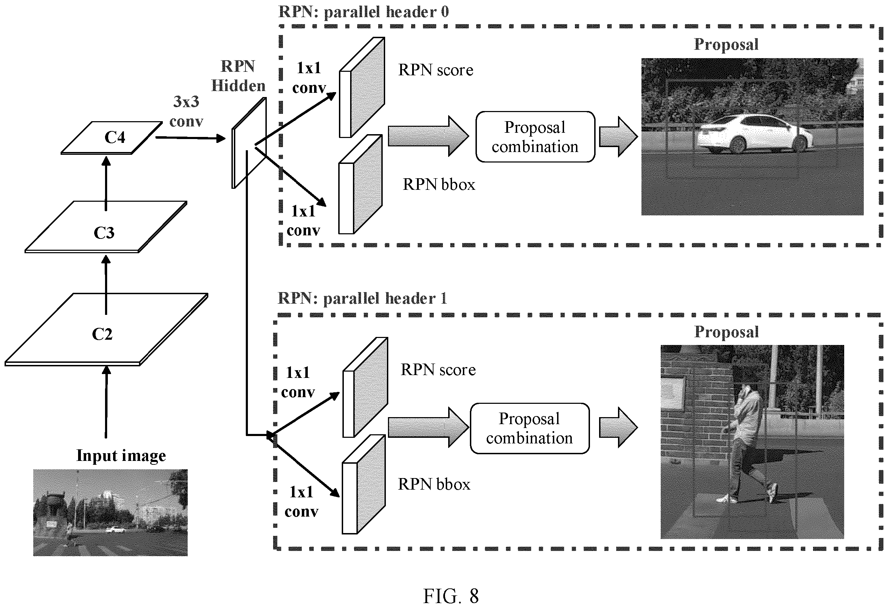

A basic structure of the RPN layer is shown in FIG. 8. A feature map RPN Hidden is generated through a 3*3 convolution on C4. Subsequently, the RPN layer of each parallel header predicts a proposal from the RPN hidden. Specifically, the RPN layer of the parallel header 0 separately predicts coordinates and confidence of a proposal at each location of the RPN hidden through two 1*1 convolutions. Higher confidence indicates a higher probability that an object of the task exists in the proposal. For example, a larger score of a proposal in the parallel header 0 indicates a higher probability that a vehicle exists in the proposal. Proposals predicted at each RPN layer need to be combined by a proposal combination module. A redundant proposal is removed based on an overlap between the proposals (this process can be performed according to but not limited to an NMS algorithm). N (N < K) proposals with the highest scores are selected from remaining K proposals as proposals in which the object may exist. It can be learned from FIG. 8 that these proposals are not accurate. On one hand, the proposals do not necessarily include the object of the task. On the other hand, these boxes are not compact. Therefore, the RPN module only performs a coarse detection process, and an RCNN module needs to perform sub-classification subsequently.

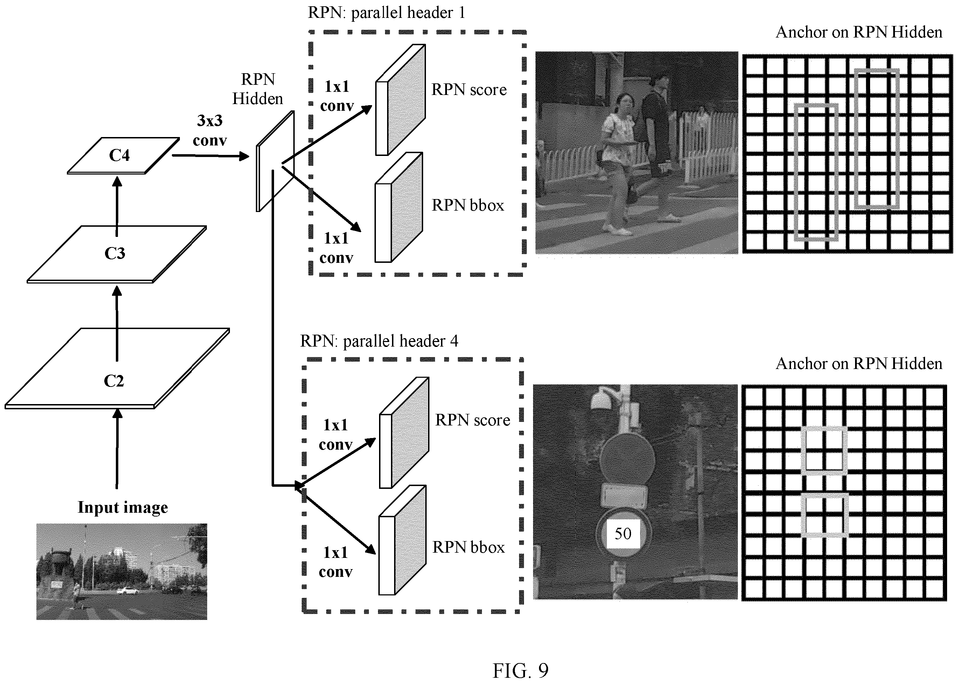

When the RPN module regresses the coordinates of the proposal, the RPN does not directly regress absolute values of the coordinates. Instead, the RPN regresses coordinates relative to an anchor. Higher matching between these anchors and actual objects indicates a higher probability that the PRN can detect the objects. In the present invention, a framework with a plurality of headers is used, and a corresponding anchor may be designed based on a scale and an aspect ratio of an object at each RPN layer, to improve a recall rate of each PRN layer. As shown in FIG. 9, the parallel header 1 is responsible for the person detection, and a main form of the person is thin and long, so that an anchor may be designed as a thin and long type. The parallel header 4 is responsible for traffic sign detection, and a main form of a traffic sign is a square, so that an anchor may be designed as a square.

4. 2D proposal feature extraction process

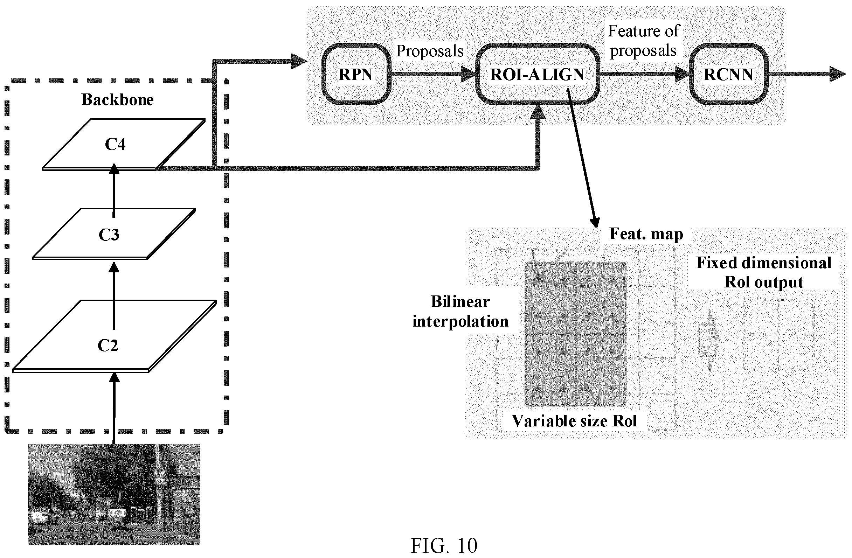

The 2D proposal feature extraction process is mainly implemented by a ROI-ALIGN module of each parallel header in FIG. 6A and FIG. 6B. The ROI-ALIGN module extracts, based on the coordinates of the proposal provided by the PRN layer, a feature of each proposal on a feature map provided by the backbone. A ROI-ALIGN process is shown in FIG. 10.

In this embodiment, the feature is extracted from the feature map C4 of the backbone. A region of each proposal on the C4 is a dark region indicated by an arrow in the figure. In this region, a feature with a fixed resolution is extracted through interpolation and sampling. It is assumed that there are N proposals, and a width and a height of the feature extracted by the ROI-ALIGN are 14. In this case, a size of the feature output by the ROI-ALIGN is N*14*14*256 (a quantity of channels of the feature extracted by the ROI-ALIGN is the same as a quantity of channels of the C4, that is, 256 channels). These features are sent to the RCNN module for sub-classification.

5. 2D proposal sub-classification

The 2D proposal sub-classification is mainly implemented by the RCNN module of each parallel header in FIG. 6A and FIG. 6B. The RCNN module further regresses, based on the feature of each proposal extracted by the ROI-ALIGN module, coordinates of a more compact 2D box, classifies the proposal, and outputs confidence that the proposal belongs to each category.

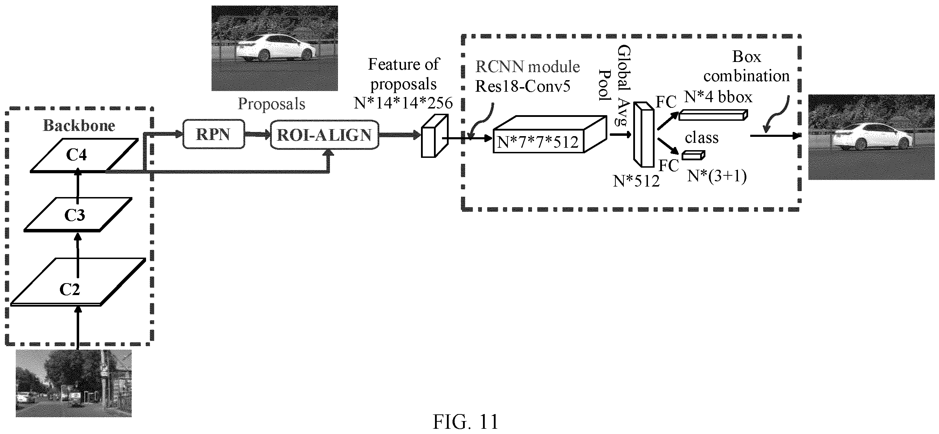

The RCNN has a plurality of implementations, and one implementation is shown in FIG. 11. The analysis is as follows:

The size of the feature output by the ROI-ALIGN module is N*14*14*256. The feature is first processed by a fifth convolution module (Resl8-Conv5) of the Resnetl8 in the RCNN module, and a feature with a size of N*7*7*512 is output. Then, the feature is processed through a Global Avg Pool (an average pooling layer), and a 7*7 feature of each channel in the input feature is averaged to obtain an N*512 feature. Each 1*512-dimensional feature vector represents the feature of each proposal. Next, precise coordinates of the box (a vector of N*4 is output, where the four values respectively indicate x/y coordinates of a center point of the box, a width and a height of the box) and confidence of a box category (In the header 0, scores that the box is Background/Car/TruckBus need to be provided) are respectively regressed through two full connection FC layers. Finally, several boxes with the highest scores are selected through a box combination operation, and duplicate boxes are removed through an NMS operation, to obtain an output of the compact box.

6. 3D detection process

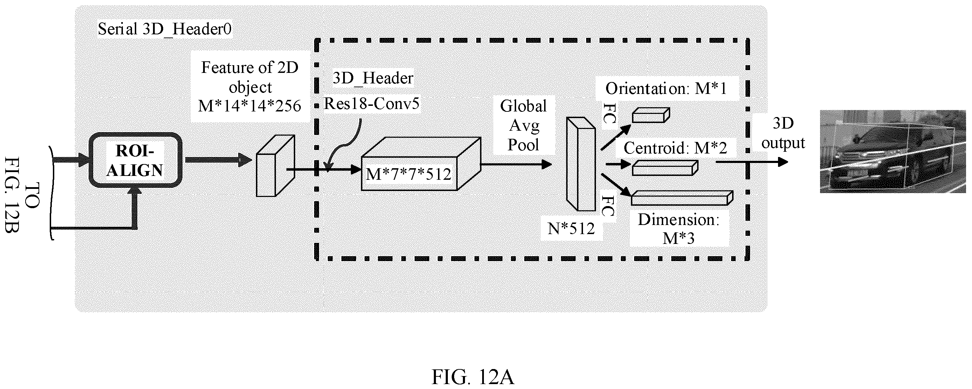

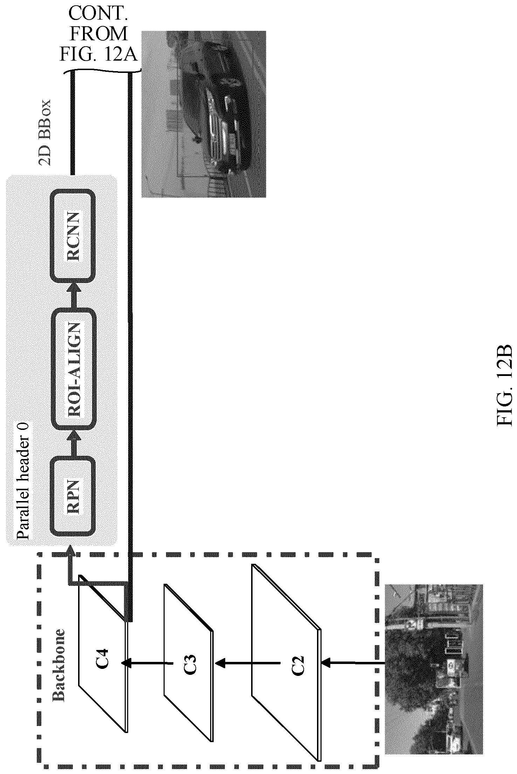

The 3D detection process is completed by serial 3D_Header0 in FIG. 6A and FIG. 6B. Based on the 2D box provided in the "2D detection" process and the feature maps provided by the backbone, in the 3D detection process, 3D information such as coordinates of a centroid, an orientation angle, a length, a width, and a height of an object in each 2D box is predicted. A possible implementation of serial 3D_Header is shown in FIG. 12A and FIG. 12B.

The ROI-ALIGN module extracts a feature of a region in which each 2D box is located from C4 based on an accurate 2D box provided by the parallel header. It is assumed that there are M 2D boxes. In this case, the size of the feature output by the ROI-ALIGN module is M*14*14*256. The feature is first processed by the fifth convolution module (Resl8-Conv5) of the Resnetl8, and the feature with the size of N*7*7*512 is output. Then, the feature is processed through the Global Avg Pool (the average pooling layer), and the 7*7 feature of each channel in the input feature is averaged to obtain an M*512 feature. Each 1*512-dimensional feature vector indicates a feature of each 2D box. Then, the orientation angle (an orientation and an M*1 vector in the figure), the coordinates of the centroid (a centroid and an M*2 vector in the figure, where the two values indicate x/y coordinates of the centroid), and the length, the width, and the height (a dimension in the figure) of the object in the box are respectively regressed through three full connection FC layers.

7. Mask detection process

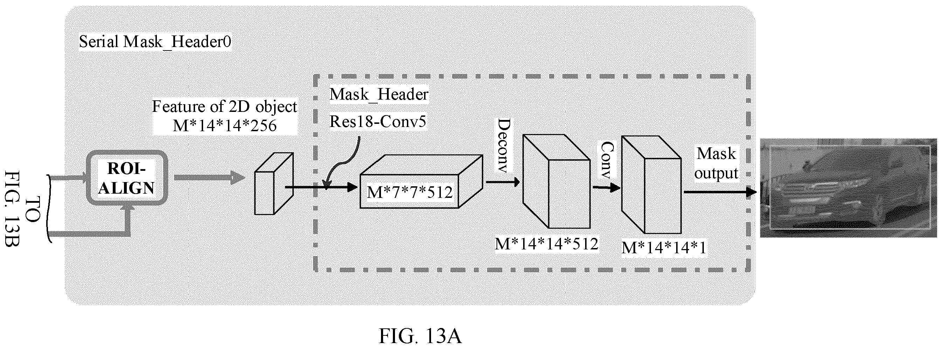

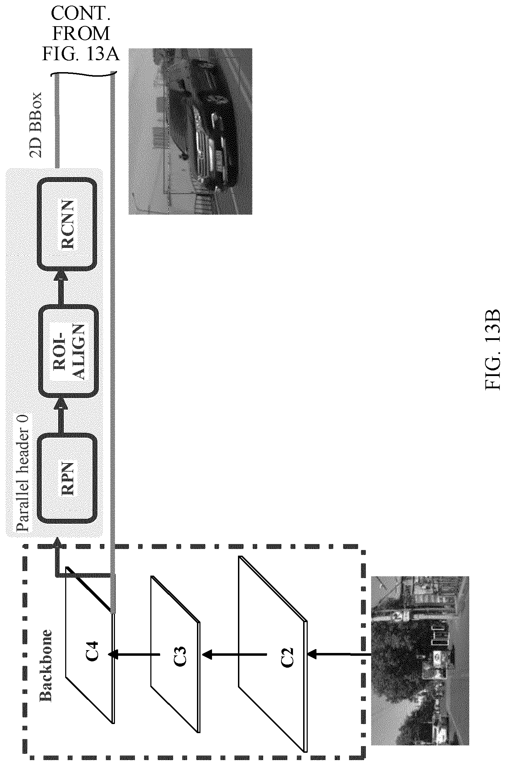

The mask detection process is completed by serial Mask_Header0 in FIG. 6A and FIG. 6B. Based on the 2D box provided in the "2D detection" process and the feature maps provided by the backbone, in the mask detection process, a fine mask of the object in each 2D box is predicted. A possible implementation of serial Mask_Header is shown in FIG. 13A and FIG. 13B.

The ROI-ALIGN module extracts the feature of the region in which each 2D box is located from C4 based on the accurate 2D box provided by the parallel header. It is assumed that there are M 2D boxes. In this case, the size of the feature output by the ROI-ALIGN module is M*14*14*256. The feature is first processed by the fifth convolution module (Resl8-Conv5) of the Resnetl8, and the feature with the size of N*7*7*512 is output. Then, a convolution is further performed through a de-convolutional layer Deconv, to obtain a feature of M*14*14*512. Finally, a mask confidence output of M*14*14*1 is obtained through a convolution. In this output, each 14*14 matrix represents confidence of a mask of the object in each 2D box. Each 2D box is equally divided into 14*14 regions, and the 14*14 matrix indicates a possibility that the object exists in each region. Thresholding processing is performed on the confidence matrix (for example, if the confidence is greater than a threshold 0.5, 1 is output; otherwise, 0 is output) to obtain the mask of the object.

8. Keypoint detection process

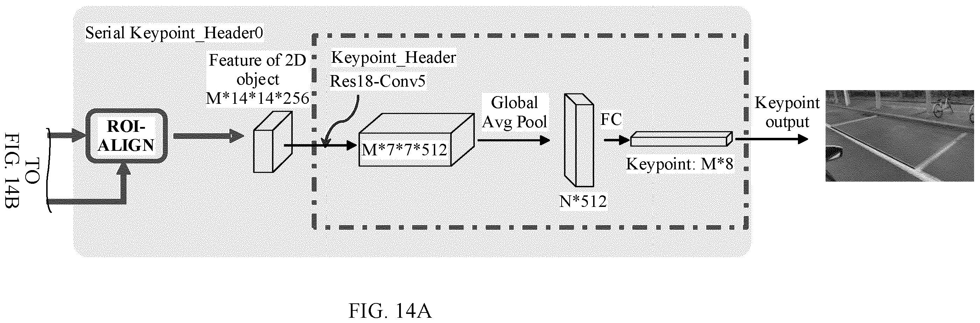

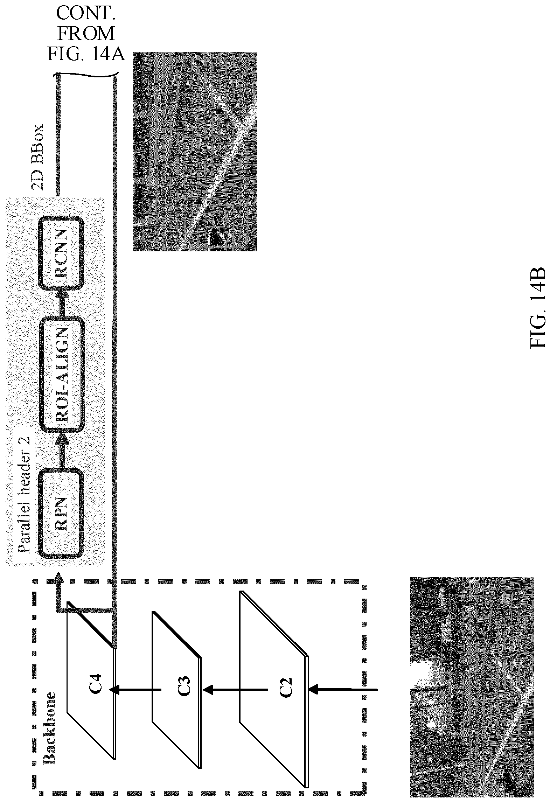

The keypoint detection process is completed by serial Keypoint_Header2 in FIG. 6A and FIG. 6B. Based on the 2D box provided in the "2D detection" process and the feature maps provided by the backbone, in the Keypoint detection process, coordinates of a keypoint of the object in each 2D box are predicted. A possible implementation of serial Keypoint_Header is shown in FIG. 14A and FIG. 14B.

The ROI-ALIGN module extracts the feature of the region in which each 2D box is located from C4 based on the accurate 2D box provided by the parallel header. It is assumed that there are M 2D boxes. In this case, the size of the feature output by the ROI-ALIGN module is M*14*14*256. The feature is first processed by the fifth convolution module (Resl8-Conv5) of the Resnetl8, and the feature with the size of N*7*7*512 is output. Then, the feature is processed through the Global Avg Pool, and the 7*7 feature of each channel in the input feature is averaged to obtain the M*512 feature. Each 1*512-dimensional feature vector indicates the feature of each 2D box. Next, the coordinates of the keypoint (a keypoint and an M*8 vector in the figure, where the eight values indicate x/y coordinates of four corner points of the parking space) of the object in the box are regressed through one full connection FC layer

According to the task division in Table 2, a training process of the perception network is further described in detail in this embodiment of this application.

A. Training data preparation

According to the task division in Table 2, labeling data needs to be provided for each task. For example, vehicle labeling data needs to be provided for header 0 training, and 2D boxes and class labels of Car/Truck/Bus need to be labeled on a dataset. Person labeling data needs to be provided for header 1 training, and 2D boxes and class labels of Pedestrian/Cyclist/Tricycle need to be labeled on a dataset. Traffic light labeling data needs to be provided for the header 3, and 2D boxes and class labels of TrafficLight_Red/Yellow/Green/Black need to be labeled on a dataset. The same rule applies to other headers.

Each type of data only needs to be labeled with a specific type of object. In this way, data can be collected in a targeted manner, and all objects of interest do not need to be labeled in each image, to reduce costs of data collection and labeling. In addition, data preparation in this manner has flexible extensibility. When an object detection type is added, only one or more headers need to be added, and a labeling data type of a newly added object needs to be provided. The newly added object does not need to be labeled on original data.

In addition, to train a 3D detection function of the header 0, independent 3D labeling data needs to be provided, and 3D information (coordinates of a centroid, an orientation angle, a length, a width, and a height) of each vehicle is labeled on the dataset. To train a mask detection function of the header 0, independent mask labeling data needs to be provided, and a mask of each vehicle is labeled on the dataset. In particular, parkinglot detection in the header 2 needs to include keypoint detection. This task requires a 2D box and a keypoint of the parking space to be labeled on the dataset at the same time. (Actually, only the keypoint needs to be labeled. The 2D box of the parking space can be automatically generated based on coordinates of the keypoint.)

Generally, only independent training data needs to be provided for each task. Alternatively, hybrid labeling data can be provided. For example, 2D boxes and class labels of Car/Truck/Bus/Pedestrian/Cyclist/Tricycle may be labeled on the dataset at the same time. In this way, the data can be used to train parallel headers of the header 0 and the header 1 at the same time. 2D/3D/mask data of Car/Truck/Bus can also be labeled on the dataset. In this way, the data can be used to train the parallel header 0, serial 3D_Header0, and serial Mask_Header0 at the same time.

A label may be specified for each image. The label determines which headers on the network can be trained based on the image. This is described in detail in a subsequent training process.

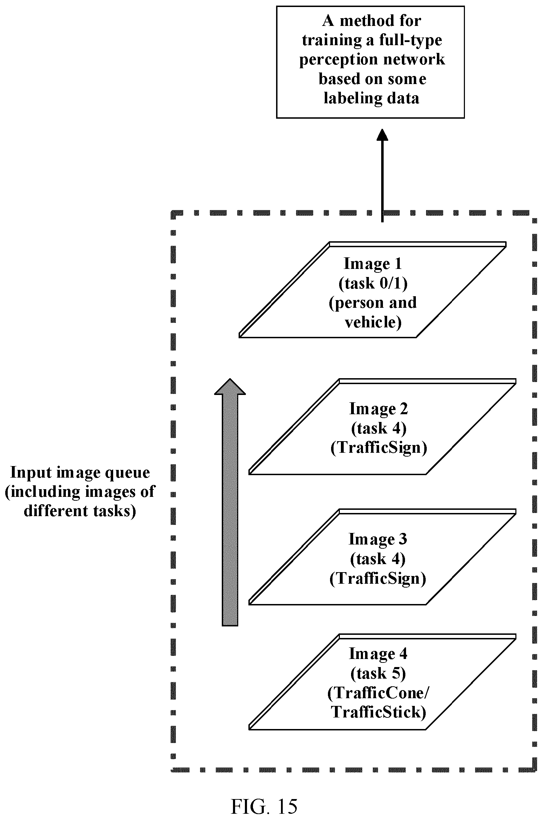

To ensure that each header obtains an equal training opportunity, data needs to be balanced. Specifically, a small amount of data is extended. An extension manner includes but is not limited to replication extension. The balanced data is randomly scrambled and then sent to the network for training, as shown in FIG. 15.

B. Full-function network training based on some labeling data

During the full-function network training based on some labeling data, a loss of a corresponding header is calculated based on a type of a task to which each input image belongs, and the loss is used for gradient backhaul. In addition, gradients of parameters on the corresponding header and the backbone are calculated. Then, the corresponding header and the backbone are adjusted based on the gradients. A header that is not in a labeling task of a current input image is not adjusted.

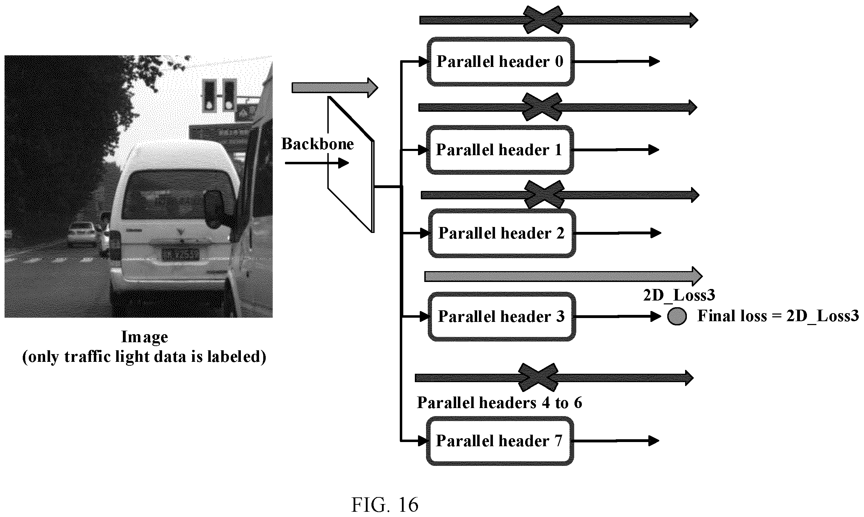

If an image is labeled with only 2D data of one task, only one corresponding parallel header is trained when the image is sent to the network for training, as shown in FIG. 16.

Only a 2D box of a traffic light is labeled in a current image. Therefore, during training, a prediction result of the traffic light in the input image is obtained only by using the parallel header 3, and is compared with a true value to obtain a loss cost 2D_Loss3 of the header. Because only one cost loss is generated, a final cost loss value is Final Loss = 2D_Loss3. In other words, the input image of the traffic light flows only through the backbone and the parallel header 3, and other headers are not involved in the training, as shown by a thick arrow without "X" in FIG. 16. After the final loss is obtained, gradients of the parallel header 3 and the backbone are calculated along a reverse direction of the thick arrow without "X" in FIG. 16. Then, parameters of the header 3 and the backbone are updated based on the gradients to adjust the network, so that the network can better predict the traffic light.

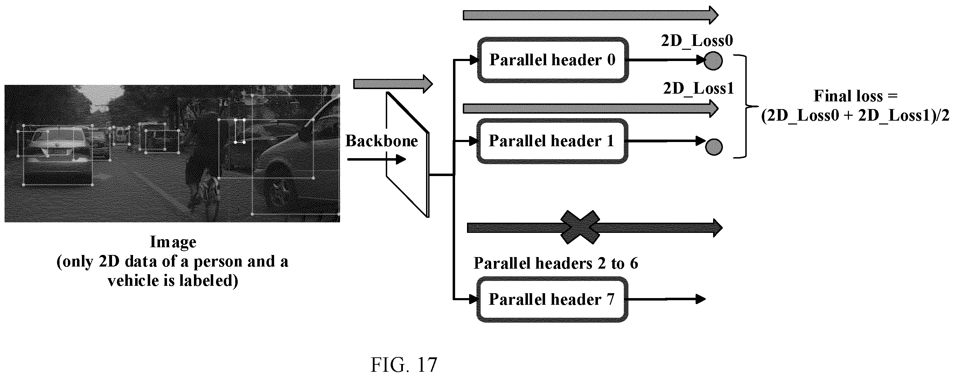

If an image is labeled with 2D data of a plurality of tasks, a plurality of corresponding parallel headers are trained when the image is sent to the network for training, as shown in FIG. 17.

2D boxes of a person and a vehicle are labeled in a current image. Therefore, during training, prediction results of the person and the vehicle in the input image are obtained by using the parallel header 0 and the parallel header 1, and are compared with a true value, to obtain loss costs 2D_Loss0/2D_Loss1 of the two headers. Because a plurality of cost losses are generated, a final cost loss value is an average value of all the losses. In other words, Final Loss = (2D_Loss0 + 2D_Loss1)/2. In other words, the input image labeled with the person and the vehicle flows only through the backbone and the parallel headers 0/1, and other headers are not involved in training, as shown by thick arrows without "X" in FIG. 17. After the final loss is obtained, gradients of the parallel headers 0/1 and the backbone are calculated along a reverse direction of the thick arrows without "X" in FIG. 17. Then, parameters of the headers 0/1 and the backbone are updated based on the gradients to adjust the network, so that the network can better predict the person and the vehicle.

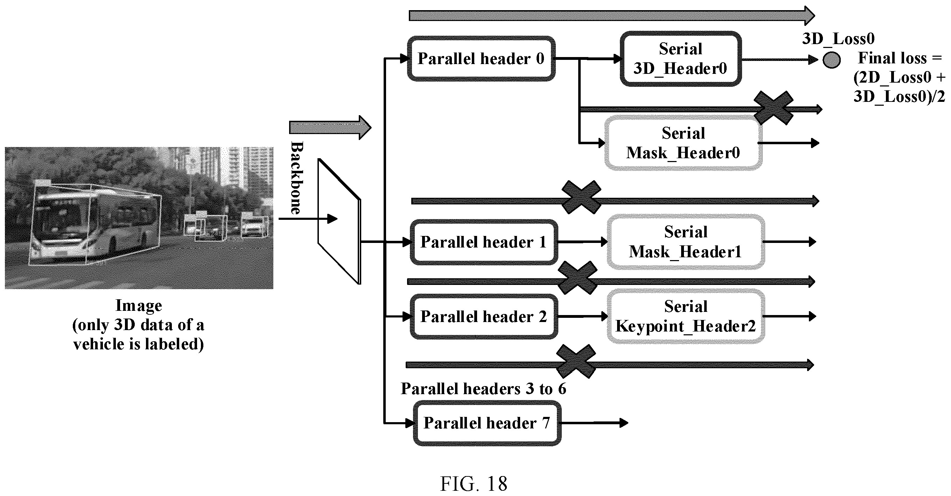

Serial header training requires an independent dataset. The following uses 3D training of a vehicle as an example. As shown in FIG. 18, 2D and 3D true values of the vehicle are labeled in the input image currently.

During training, a data flow direction is indicated by a thick arrow without X in the figure, and thick arrows with "X" indicate headers that a data flow cannot reach. After the image is sent to the network, 2D and 3D loss values are calculated at the same time, to obtain a final Final Loss = (2D_Loss0 + 3D_Loss0)/2. Then, gradients of the serial 3D header 0, the parallel header 0, and the backbone are calculated along a reverse direction of the thick arrow without "X". Then, parameters of the serial 3D header 0, the parallel header 0, and the backbone are updated based on the gradients to adjust the network, so that the network can better predict 2D and 3D information of the vehicle.

When each image is sent to the network for training, only a corresponding header and the backbone are adjusted to improve performance of a corresponding task. In this process, performance of another task deteriorates. However, when an image of the another task is used later, the deteriorated header can be adjusted. Training data of all tasks is balanced in advance, and each task obtains an equal training opportunity. Therefore, a case in which a task is over-trained does not occur. According to this training method, the backbone learns common features of each task, and each header learns a specific feature of a task of the header.

Currently, more functions need to be implemented by a perception network. If a plurality of networks are used to implement a single-point function, a total calculation amount is large. An embodiment of the present invention provides a multi-header-based high-performance extensible perception network. All perception tasks share a same backbone, greatly reducing a calculation amount and a parameter amount of the network. Table 3 shows statistics of a calculation amount and a parameter amount for implementing a single function through a single-header network.

**Table 3 Statistics of the calculation amount and the parameter amount of the single-header network**

| Single-Header-Model@720p | GFlops | Parameters (M) |
|---|---|---|
| Vehicle (Car/Truck/Tram) | 235.5 | 17.76 |
| Vehicle + Mask + 3D | 235.6 | 32.49 |
| Person (Pedestrian/Cyclist/Tricycle) | 235.5 | 17.76 |
| Person + Mask | 235.6 | 23.0 |
| Motocycle/Bicycle | 235.5 | 17.76 |
| TrafficLight (Red/Green/Yellow/Black) | 235.6 | 17.76 |
| TrafficSign (Trafficsign/Guideside/Billboard) | 235.5 | 17.75 |
| TrafficCone/TrafficStick/FireHydrant | 235.5 | 17.75 |
| Parkinglot (with keypoint) | 235.6 | 18.98 |
| Full-function network (a plurality of single-header networks) | 1648.9 | 145.49 |

It can be learned from the table that, if eight networks are used to implement all functions in this embodiment, a required total calculation amount is 1648.9 GFlops, and a required total network parameter amount is 145.49M. The calculation amount and the network parameter amount are huge, and bring great pressure to hardware.

Table 4 shows a calculation amount and a parameter amount for implementing all the functions in this embodiment through a multi-header network.

**Table 4 Statistics of the calculation amount and the parameter amount of the multi-header network**

| Multi-Header-Model@720p | GFlops | Parameters (M) |
|---|---|---|
| Full-function network (a single multi-header network) | 236.6 | 42.16 |

It can be learned from the table that the calculation amount and the parameter amount of the multi-header network are only 1/7 and 1/3 of those of the single-header network. This greatly reduces calculation consumption.

In addition, the multi-header network may implement the same detection performance as the single-header network. Table 5 shows performance comparison between the multi-header network and the single-header network in some categories.

**Table 5 Comparison of detection performance between the single-header network and the multi-header network**

| Category | Single-Header | Multi-Header |
| --- | --- | --- |
| Car | 91.7 | 91.6 |
| Tram | 81.8 | 80.1 |
| Pedestrian | 73.6 | 75.2 |
| Cyclist | 81.8 | 83.3 |
| TrafficLight | 98.3 | 97.5 |
| TrafficSign | 95.1 | 94.5 |
| Parkinglot (point precision/recall) | 94.01/80.61 | 95.17/78.89 |
| 3D (mean_orien_err/mecentroid_dist_err) | 2.95/6.78 | 2.88/6.34 |

It can be learned from the table that, the performance of the two networks is equivalent. Therefore, the performance of the multi-header network does not deteriorate when the calculation amount and memory are reduced.

An embodiment of the present invention provides a multi-header-based high-performance extensible perception network, to implement different perception tasks (2D/3D/keypoint/semantic segmentation, or the like) on a same network at the same time. The perception tasks on the network share a same backbone, to reduce a calculation amount; and a network structure is easy to expand, so that only one header needs to be added to add a function. In addition, an embodiment of the present invention further provides a method for training a multi-task perception network based on some labeling data. Each task uses an independent dataset, and does not need to perform full-task labeling on a same image. Training data of different tasks is conveniently balanced, and the data of the different tasks does not suppress each other.

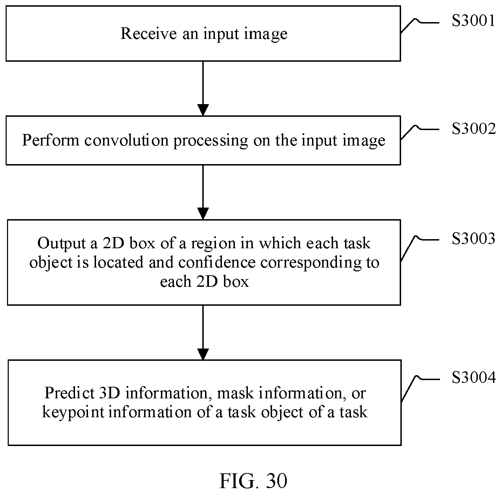

As shown in FIG. 30, an embodiment of the present invention further provides an object detection method. The method includes the following steps.

S3001: An input image is received.

S3002: Convolution processing is performed on the input image, and feature maps, corresponding to the image, that have different resolutions are output.

S3003: For different tasks, a task object in each task is independently detected based on the feature maps, and a 2D box of a region in which each task object is located and confidence corresponding to each 2D box are output, where the task object is an object that needs to be detected in the task, and higher confidence indicates a higher probability that the object corresponding to the task exists in the 2D box corresponding to the confidence.

Optionally, in an embodiment, S3002 may include the following four steps.

1: The region in which the task object is located is predicted on one or more feature maps, and a candidate 2D box matching the region is output.

Optionally, based on an anchor (Anchor) of an object corresponding to a task, a region in which the task object exists is predicted on the one or more feature maps provided by the backbone, to obtain a proposal, and a candidate 2D box matching the proposal is outputted. The anchor is obtained based on a statistical feature of the task object to which the anchor belongs, and the statistical feature includes a shape and a size of the object.

2: Based on the region in which the task object is located, a feature of a region in which the candidate 2D box is located is extracted from a feature map.

3: Convolution processing is performed on the feature of the region in which the candidate 2D box is located, to obtain confidence that the candidate 2D box belongs to each object category, where the object category is an object category in a task.

4: Coordinates of the candidate 2D box of the region are adjusted through a neural network, so that an adjusted 2D candidate box more matches a shape of an actual object than the candidate 2D box does; and an adjusted 2D candidate box whose confidence is greater than a preset threshold is selected as a 2D box of the region.

Optionally, the 2D box may be a rectangular box.

Optionally, the method further includes the following step.

S3004: The feature of the region in which the 2D box is located is extracted from the one or more feature maps on the backbone based on the 2D box of the task object of the task; and 3D information, mask information, or keypoint information of the task object of the task is predicted based on the feature of the region in which the 2D box is located.

Optionally, detection of a region in which a large object is located may be completed on a low-resolution feature, and an RPN module detects a region in which a small object is located on a high-resolution feature map.

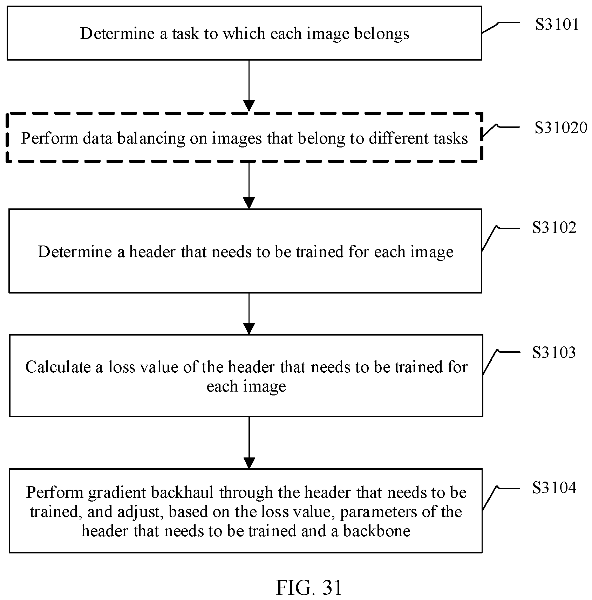

As shown in FIG. 31, an embodiment of the present invention further provides a method for training a multi-task perception network based on some labeling data. The method includes:

S3101: A task to which each image belongs is determined based on a labeling data type of each image, where each image is labeled with one or more data types, the plurality of data types are a subset of all data types, and a data type corresponds to a task.

S3102: A header that needs to be trained for each image is determined based on the task to which each image belongs.

S3103: A loss value of the header that needs to be trained for each image is calculated.

S3104: For each image, gradient backhaul is performed through the header that needs to be trained, and parameters of the header that needs to be trained and the backbone are adjusted based on the loss value.

Optionally, as shown in a dashed box in FIG. 31, before step S3102, the method further includes:

S31020: Data balancing is performed on images that belong to different tasks.

An embodiment of the present invention further provides a multi-header-based object perception method. A process of the perception method provided in this embodiment of the present invention includes two parts: an "inference" process and a "training" process. The two processes are described separately as follows:

## 1. Perception process

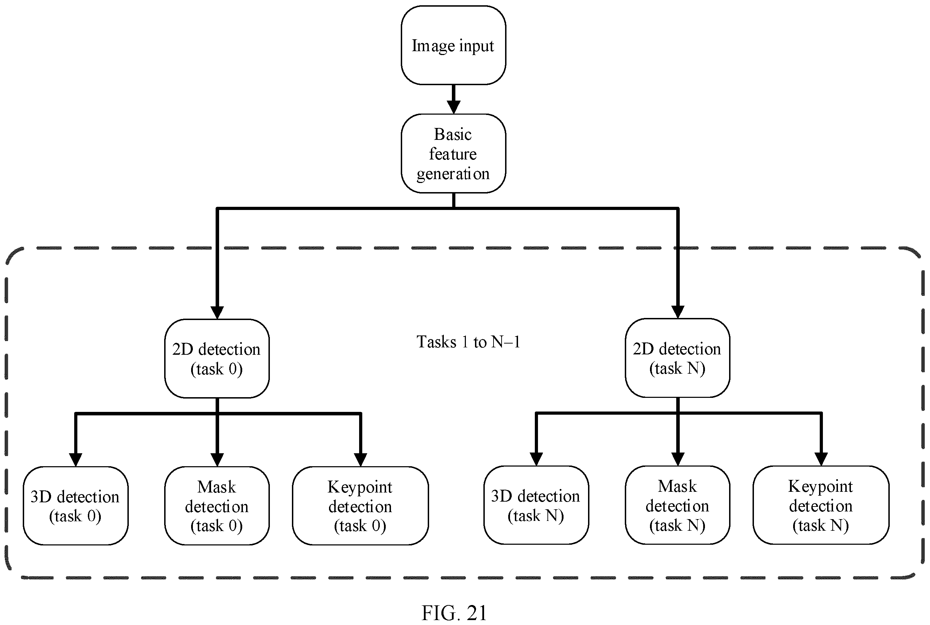

The process of the perception method provided in this embodiment of the present invention is shown in FIG. 21.

In step S210, an image is input to a network.

In step S220, a "basic feature generation" process is entered.

In this process, basic feature extraction is performed on the image by using the backbone in FIG. 5, to obtain feature maps with different scales. After a basic feature is generated, a core process in which a dashed box in FIG. 21 is located is entered. In the core process, each task has an independent "2D detection" process and optional "3D detection", "mask detection", and "keypoint detection" processes. The following describes the core process.

## 1. 2D detection process

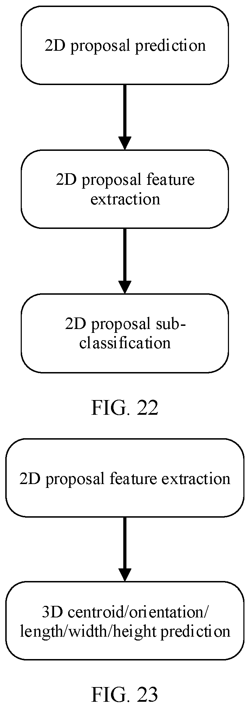

In the "2D detection" process, a 2D box and confidence of each task are predicted based on the feature maps generated in the "basic feature generation" process. Specifically, the "2D detection" process may further be divided into a "2D proposal prediction" process, a "2D proposal feature extraction" process, and a "2D proposal sub-classification" process, as shown in FIG. 22.

The "2D proposal prediction" process is implemented by the RPN module in FIG. 5. The RPN module predicts regions in which a task object may exist on one or more feature maps provided in the "basic feature generation" process, and provides proposals (Proposal) of these regions.

The "2D proposal feature extraction" process is implemented by the ROI-ALIGN module in FIG. 5. The ROI-ALIGN module extracts, based on the proposals provided in the "2D proposal prediction" process, a feature of a region in which each proposal is located from a feature map provided in the "basic feature generation" process, and resizes the feature to a fixed size to obtain a feature of each proposal.

The "2D proposal sub-classification" process is implemented by the RCNN module in FIG. 5. The RCNN module further predicts the feature of each proposal through a neural network, outputs confidence that each proposal belongs to each category, and adjusts coordinates of a 2D box of the proposal, to output a more compact 2D box.

## 2. 3D detection process

In the "3D detection" process, 3D information such as coordinates of a centroid, an orientation angle, a length, a width, and a height of an object in each 2D box are predicted based on the 2D box provided in the "2D detection" process and the feature maps generated in the "basic feature generation" process. Specifically, the "3D detection" includes two subprocesses, as shown in FIG. 23.

The subprocesses are analyzed as follows:

The "2D proposal feature extraction" process is implemented by the ROI-ALIGN module in FIG. 5. The ROI-ALIGN module extracts, based on coordinates of the 2D box, a feature of a region in which each 2D box is located from a feature map provided in the "basic feature generation" process, and resizes the feature to a fixed size to obtain a feature of each 2D box.

A "3D centroid/orientation/length/width/height prediction" process is implemented by the 3D_Header in FIG. 5.

The 3D_Header mainly regresses the 3D information such as the coordinates of the centroid, the orientation angle, the length, the width, and the height of the object in the 2D box based on the feature of each 2D box.

### 3. Mask detection process

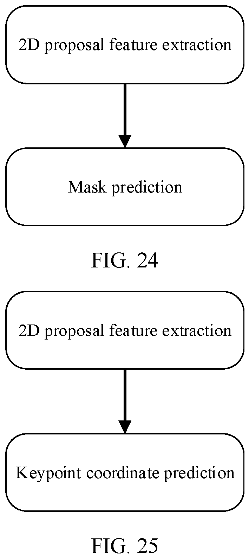

In the "mask detection" process, a fine mask of the object in each 2D box is predicted based on the 2D box provided in the "2D detection" process and the feature maps generated in the "basic feature generation" process. Specifically, the "mask detection" includes two subprocesses, as shown in FIG. 24.

The subprocesses are analyzed as follows:

The "2D proposal feature extraction" process is implemented by the ROI-ALIGN module in FIG. 5. The ROI-ALIGN module extracts, based on the coordinates of the 2D box, the feature of the region in which each 2D box is located from a feature map provided in the "basic feature generation" process, and resizes the feature to a fixed size to obtain the feature of each 2D box.

A "mask prediction" process is implemented by the Mask_Header in FIG. 5. The Mask_Header mainly regresses, based on the feature of each 2D box, the mask in which the object in the 2D box is located.

### 4. Keypoint detection process

In the "keypoint prediction" process, the mask of the object in each 2D box is predicted based on the 2D box provided in the "2D detection" process and the feature maps generated in the "basic feature generation" process. Specifically, the "keypoint prediction" includes two subprocesses, as shown in FIG. 25.

The subprocesses are analyzed as follows:

The "2D proposal feature extraction" process is implemented by the ROI-ALIGN module in FIG. 5. The ROI-ALIGN module extracts, based on the coordinates of the 2D box, the feature of the region in which each 2D box is located from a feature map provided in the "basic feature generation" process, and resizes the feature to a fixed size to obtain the feature of each 2D box.

A "keypoint coordinate prediction" process is implemented by the Keypoint_Header in FIG. 5. The Keypoint_Header mainly regresses coordinates of a keypoint of the object in the 2D box based on the feature of each 2D box.

### 2. Training Process

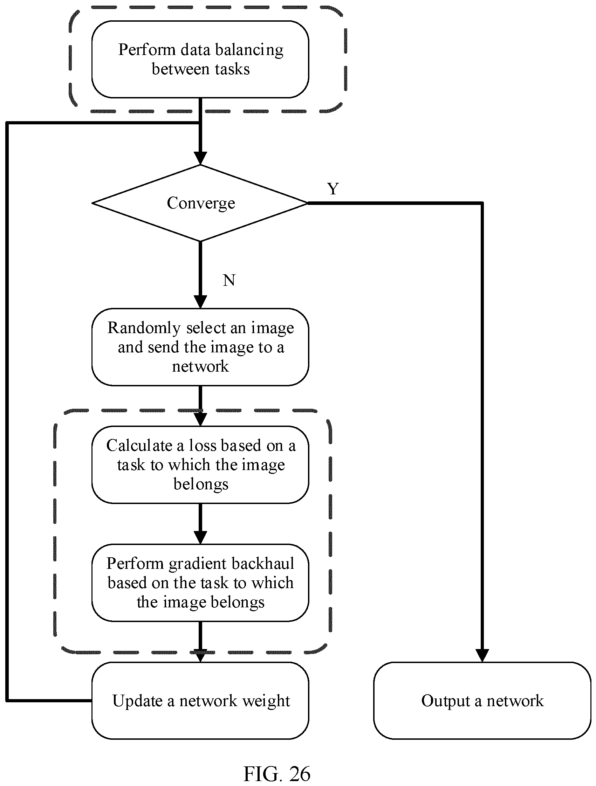

The training process in this embodiment of the present invention is shown in FIG. 26.

Parts in red boxes are a core training process. The following describes the core training process.

### 1. Data balancing process between tasks

Amounts of data of the tasks are extremely unbalanced. For example, a quantity of images including a person is much greater than a quantity of images including a traffic sign. To enable a header of each task to obtain an equal training opportunity, the data between the tasks needs to be balanced. Specifically, a small amount of data is extended. An extension manner includes but is not limited to replication extension.

### 2. Loss calculation process based on a task to which an image belongs

Each image may belong to one or more tasks based on a labeling data type of the image. For example, if an image is labeled with only a traffic sign, the image belongs to only a task of traffic sign. If an image is labeled with both a person and a vehicle, the image belongs to both a task of person and a task of vehicle. When a loss is calculated, only a loss of a header corresponding to a task to which a current image belongs is calculated. A loss of another task is not calculated. For example, if a current input training image belongs to the task of person and the task of vehicle, only losses of headers corresponding to the person and the vehicle are calculated. A loss of another object (for example, a traffic light or a traffic sign) is not calculated.

### 3. Gradient backhaul process based on the task to which the image belongs

After the loss is calculated, gradient backhaul is required. In this case, only a header of a current task is used for the gradient backhaul, and a header that is not in the current task is not used for the gradient backhaul. In this way, a current header can be adjusted for the current image, so that the current header can better learn the current task. Because the data of the tasks has been balanced, each header can obtain the equal training opportunity. Therefore, in this repeated adjustment process, each header learns a feature related to the task, and the backbone learns a common feature of the tasks.

In this embodiment of this application, disadvantages of an existing method are comprehensively considered, and a multi-header-based high-performance extensible perception network is provided, to implement different perception tasks (2D/3D/keypoint/semantic segmentation, or the like) on a same network. The perception tasks on the network share a same backbone. This greatly reduces the calculation amount. In addition, a network structure of the network is easy to expand, so that only one or more headers need to be added to extend a function.

In addition, an embodiment of this application further provides a method for training a multi-task perception network based on some labeling data. Each task uses an independent dataset, and does not need to perform full-task labeling on a same image. Training data of different tasks is conveniently balanced, and the data of the different tasks does not suppress each other.

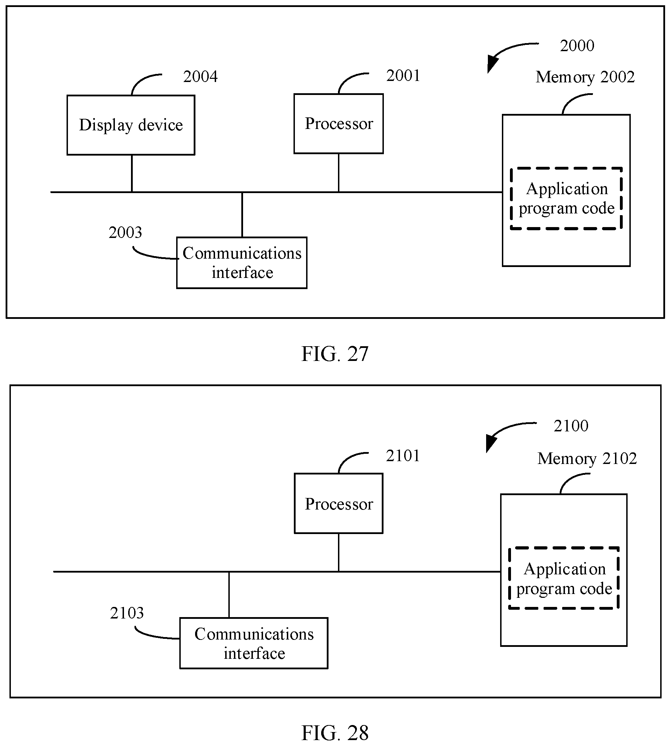

The perception network shown in FIG. 5 may be implemented by using a structure in FIG. 27. FIG. 27 is a schematic diagram of an application system of the perception network. As shown in the figure, a perception network 2000 includes at least one processor 2001, at least one memory 2002, at least one communications interface 2003, and at least one display device 2004. The processor 2001, the memory 2002, the display device 2004, and the communications interface 2003 are connected and communicate with each other through a communications bus.

The communications interface 2003 is configured to communicate with another device or a communications network, for example, the Ethernet, a radio access network (radio access network, RAN), or a wireless local area network (wireless local area networks, WLAN).

The memory 2002 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile optical disc, a blue-ray optical disc, or the like), a magnetic disk storage medium or another magnetic storage device, or any other medium capable of carrying or storing expected program code in a form of an instruction or a data structure and capable of being accessed by a computer. This is not limited thereto. The memory may exist independently, and be connected to the processor through the bus. Alternatively, the memory may be integrated with the processor

The memory 2002 is configured to store application program code for executing the foregoing solution, and the processor 2001 controls execution. The processor 2001 is configured to execute the application program code stored in the memory 2002.

The code stored in the memory 2002 may be executed to perform the multi-header-based object perception method provided in the foregoing.

The display device 2004 is configured to display a to-be-recognized image and information such as 2D information, 3D information, mask information, and keypoint information of an object of interest in the image.

The processor 2001 may further use one or more integrated circuits to execute a related program, so as to implement the multi-header-based object perception method or the model training method in the embodiments of this application.

Alternatively, the processor 2001 may be an integrated circuit chip, and has a signal processing capability. In an implementation process, steps of the recommendation method in this application may be completed by using a hardware integrated logic circuit or an instruction in a form of software in the processor 2001. In an implementation process, steps of the training method in the embodiments of this application can be implemented by using a hardware integrated logic circuit or an instruction in a form of software in the processor 2001. Alternatively, the processor 2001 may be a general-purpose processor, a digital signal processor (digital signal processing, DSP), an ASIC, a field programmable gate array (field programmable gate array, FPGA) or another programmable logic device, a discrete gate or a transistor logic device, or a discrete hardware component. The processor 2001 can implement or perform the methods, steps, and module block diagrams that are disclosed in the embodiments of this application. The general-purpose processor may be a microprocessor, or the processor may be any conventional processor or the like. Steps of the methods disclosed with reference to the embodiments of this application may be directly executed and completed by a hardware decoding processor, or may be executed and completed by a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 2002. The processor 2001 reads information in the memory 2002, and completes the object perception method or the model training method in the embodiments of this application in combination with hardware of the processor 2001.

The communications interface 2003 uses a transceiver apparatus, such as but not limited to a transceiver, to implement communication between a recommendation apparatus or a training apparatus and another device or a communications network. For example, the to-be-recognized image or training data may be obtained through the communications interface 2003.

The bus may include a path for transmitting information between the components (for example, the memory 2002, the processor 2001, the communications interface 2003, and the display device 2004) of the apparatus. In a possible embodiment, the processor 2001 specifically performs the following steps: receiving an input image; performing convolution processing on the input image; outputting feature maps, corresponding to the image, that have different resolutions; and independently detecting, for different tasks and based on a feature map provided by a backbone, an object corresponding to each task, and outputting a 2D box of a proposal of the object corresponding to each task and confidence corresponding to each 2D box.

In a possible embodiment, when performing the step of independently detecting, for different tasks and based on a feature map provided by a backbone, an object corresponding to each task, and outputting a 2D box of a proposal of the object corresponding to each task and confidence corresponding to each 2D box, the processor 2001 specifically performs the following steps: predicting, on one or more feature maps, a region in which the task object exists to obtain a proposal, and outputting a candidate 2D box matching the proposal; extracting, based on a proposal obtained by an RPN module, a feature of a region in which the proposal is located from a feature map; refining the feature of the proposal to obtain confidence of the proposal corresponding to each object category, where the object is an object in a corresponding task; and adjusting coordinates of the proposal to obtain a second candidate 2D box, where the second 2D candidate box more matches an actual object than the candidate 2D box does, and selecting a 2D candidate box whose confidence is greater than a preset threshold as the 2D box of the proposal.

In a possible embodiment, when performing the predicting, on one or more feature maps, a region in which the task object exists to obtain a proposal, and outputting a candidate 2D frame matching the proposal, the processor 2001 specifically performs the following step:

predicting, based on an anchor (Anchor) of an object corresponding to a task, a region in which the task object exists on the one or more feature maps, to obtain a proposal, and outputting a candidate 2D box matching the proposal, where the anchor is obtained based on a statistical feature of the task object to which the anchor belongs, and the statistical feature includes a shape and a size of the object.

In a possible embodiment, the processor 2001 further performs the following steps:

extracting, based on a 2D box of the object corresponding to the task, a feature of the object from one or more feature maps on the backbone, and predicting 3D information, mask information, or keypoint information of the object.

In a possible embodiment, detection of a proposal of a large object is completed on a low-resolution feature map, and detection of a proposal of a small object is completed on a high-resolution feature map.

In a possible embodiment, the 2D box is a rectangular box.

Optionally, as shown in FIG. 28, a structure of the perception network may be implemented as a server, and the server may be implemented by using a structure in FIG. 28. A server 2110 includes at least one processor 2101, at least one memory 2102, and at least one communications interface 2103. The processor 2101, the memory 2102, and the communications interface 2103 are connected and communicate with each other through a communications bus.

The communications interface 2103 is configured to communicate with another device or a communications network such as the Ethernet, a RAN, or a WLAN.

The memory 2102 may be a ROM or another type of static storage device capable of storing static information and instructions, or a RAM or another type of dynamic storage device capable of storing information and instructions, or may be an EEPROM, a CD-ROM or other compact disc storage, optical disc storage (including a compressed optical disc, a laser disc, an optical disc, a digital versatile optical disc, a blue-ray optical disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and be connected to the processor through the bus. Alternatively, the memory may be integrated with the processor.

The memory 2102 is configured to store application program code for executing the foregoing solution, and the processor 2101 controls execution. The processor 2101 is configured to execute the application program code stored in the memory 2102.

The code stored in the memory 2102 may be executed to perform the multi-header-based object perception method provided in the foregoing.

The processor 2101 may further use one or more integrated circuits to execute a related program, so as to implement the multi-header-based object perception method or the model training method in the embodiments of this application.

Alternatively, the processor 2101 may be an integrated circuit chip, and has a signal processing capability. In an implementation process, steps of the recommendation method in this application may be completed by using a hardware integrated logic circuit or an instruction in a form of software in the processor 2101. In an implementation process, steps of the training method in the embodiments of this application can be implemented by using a hardware integrated logic circuit or an instruction in a form of software in the processor 2101. Alternatively, the processor 2001 may be a general-purpose processor, a DSP, an ASIC, an FPGA or another programmable logic device, a discrete gate or a transistor logic device, or a discrete hardware component. The processor 2101 can implement or perform the methods, steps, and module block diagrams that are disclosed in the embodiments of this application. The general-purpose processor may be a microprocessor, or the processor may be any conventional processor or the like. Steps of the methods disclosed with reference to the embodiments of this application may be directly executed and completed by a hardware decoding processor, or may be executed and completed by a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 2102. The processor 2101 reads information in the memory 2102, and completes the object perception method or the model training method in the embodiments of this application in combination with hardware of the processor 2101.

The communications interface 2103 uses a transceiver apparatus, such as but not limited to a transceiver, to implement communication between a recommendation apparatus or a training apparatus and another device or a communications network. For example, a to-be-recognized image or training data may be obtained through the communications interface 2103.

The bus may include a path for transmitting information between the components (for example, the memory 2102, the processor 2101, and the communications interface 2103) of the apparatus. In a possible embodiment, the processor 2101 specifically performs the following steps: predicting, on one or more feature maps, a region in which a task object exists to obtain a proposal, and outputting a candidate 2D box matching the proposal; extracting, based on a proposal obtained by an RPN module, a feature of a region in which the proposal is located from a feature map; refining the feature of the proposal to obtain confidence of the proposal corresponding to each object category, where the object is an object in a corresponding task; and adjusting coordinates of the proposal to obtain a second candidate 2D box, where the second 2D candidate box more matches an actual object than the candidate 2D box does, and selecting a 2D candidate box whose confidence is greater than a preset threshold as the 2D box of the proposal.

This application provides a computer-readable medium. The computer-readable medium stores program code to be executed by a device, and the program code includes related content used to perform the object perception method in the embodiment shown in FIG. 21, FIG. 22, FIG. 23, FIG. 24, or FIG. 25.

This application provides a computer-readable medium. The computer-readable medium stores program code to be executed by a device, and the program code includes related content used to perform the training method in the embodiment shown in FIG. 26.

This application provides a computer program product including an instruction. When the computer program product runs on a computer, the computer is enabled to perform related content of the perception method in the embodiment shown in FIG. 21, FIG. 22, FIG. 23, FIG. 24, or FIG. 25.

This application provides a computer program product including an instruction. When the computer program product runs on a computer, the computer is enabled to perform related content of the training method in the embodiment shown in FIG. 26.

This application provides a chip. The chip includes a processor and a data interface. The processor reads, through the data interface, an instruction stored in a memory, to perform related content of the object perception method in the embodiment shown in FIG. 21, FIG. 22, FIG. 23, FIG. 24, FIG. 25, or FIG. 26.

This application provides a chip. The chip includes a processor and a data interface. The processor reads, through the data interface, an instruction stored in a memory, and performs related content of the training method in the embodiment shown in FIG. 26.

Optionally, in an implementation, the chip may further include a memory. The memory stores the instruction, and the processor is configured to execute the instruction stored in the memory. When the instruction is executed, the processor is configured to perform related content of the perception method in the embodiment shown in FIG. 21, FIG. 22, FIG. 23, FIG. 24 or FIG. 25, or related content of the training method in the embodiment shown in FIG. 26.

It should be noted that, to make the description brief, the method embodiments are expressed as a series of actions. However, a person skilled in the art should know that the present invention is not limited to the described action sequence, because according to the present invention, some steps may be performed in another sequence or performed simultaneously. In addition, a person skilled in the art should also know that all the embodiments described in the specification are used as examples, and the related actions and modules are not necessarily mandatory to the present invention.

In the foregoing embodiments, the descriptions of the embodiments have respective focuses. For a part that is not described in detail in an embodiment, refer to related descriptions in other embodiments.

In conclusion, beneficial effects of the embodiments of this application are summarized as follows:

(1) All the perception tasks share the same backbone, so that the calculation amount is greatly reduced. The network structure is easy to expand, so that only one or some headers need to be added to expand the 2D detection type. Each parallel header has the independent RPN and RCNN modules, and only the object of the task to which the parallel header belongs needs to be detected. In this way, in the training process, a false injury to an object of another unlabeled task can be avoided. In addition, an independent RPN layer is used, and a dedicated anchor may be customized based on a scale and an aspect ratio of an object of each task, to increase an overlap proportion between the anchor and the object, and further improve a recall rate of the RPN layer for the object.

(2) 3D, mask, and keypoint detection functions can be implemented in a flexible and convenient manner. In addition, these function extensions share the same backbone with 2D parts, so that the calculation amount is not significantly increased. Implementing a plurality of functions through one network is easy to be implemented on the chip.

(3) Each task uses the independent dataset. All tasks do not need to be labeled on a same image, to reduce labeling costs. Task expansion is flexible and simple. When a new task is added, only data of the new task needs to be provided, and a new object does not need to be labeled on original data. The training data of different tasks is conveniently balanced, so that each task obtains the equal training opportunity, and a large amount of data is prevented from drowning a small amount of data.

In the several embodiments provided in this application, it should be understood that the disclosed apparatus may be implemented in another manner. For example, the described apparatus embodiments are merely examples. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or another form.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable memory. Based on such an understanding, the technical solutions of the present invention essentially, or the part contributing to a prior art, or all or some of the technical solutions may be implemented in the form of a software product. The computer software product is stored in a memory and includes several instructions for instructing a computer device (which may be a personal computer, a server, or a network device) to perform all or some of the steps of the methods described in the embodiments of the present invention. The foregoing memory includes any medium that can store program code, such as a USB flash drive, a ROM, a RAM, a removable hard disk, a magnetic disk, or an optical disc.

A person of ordinary skill in the art may understand that all or some of the steps of the methods in the embodiments may be implemented by a program instructing relevant hardware. The program may be stored in a computer-readable memory. The memory may include a flash memory, a ROM, a RAM, a magnetic disk, an optical disc, or the like.

The embodiments of this application are described in detail above. The principle and implementation of this application are described herein through specific examples. The description about the embodiments is merely provided to help understand the method and core ideas of this application. In addition, a person of ordinary skill in the art can make variations and modifications to this application in terms of the specific implementations and application scopes based on the ideas of the present invention. Therefore, the content of this specification shall not be construed as a limit to the present invention.

**Claims**

1.  A perception network based on a plurality of headers, wherein the perception network comprises a backbone and a plurality of parallel headers, and the plurality of parallel headers are connected to the backbone;

    the backbone is configured to receive an input image, perform convolution processing on the input image, and output feature maps, corresponding to the image; and
    each of the plurality of parallel headers is configured to detect a task object in a task based on the feature maps output by the backbone, and output a 2D box of a region in which the task object is located and confidence corresponding to each 2D box, wherein each parallel header detects a different task object, the task object is an object that needs to be detected in the task, and higher confidence indicates a higher probability that the task object corresponding to the task exists in the 2D box corresponding to the confidence,

wherein the perception network further comprises one or more serial headers, and the serial headers are connected to a parallel header; and

the serial header is configured to extract, on the one or more feature maps on the backbone through a 2D box of a task object of a task that is provided by the parallel header connected to the serial header and to which the parallel header belongs, a feature of a region in which the 2D box is located, and predict, based on the feature of the region in which the 2D box is located, 3D information, mask information, or keypoint information of the task object of the task to which the parallel header belongs.

2. The perception network according to claim 1, wherein each parallel header comprises a region proposal network, RPN, module, a region of interest-align, ROI-ALIGN, module, and a region convolutional neural network, RCNN, module, the RPN module of each parallel header is independent of an RPN module of another parallel header, the ROI-ALIGN module of each parallel header is independent of an ROI-ALIGN module of another parallel header, and the RCNN module of each parallel header is independent of an RCNN module of another parallel header; and for each parallel header:

the RPN module is configured to predict, on one or more feature maps provided by the backbone, the region in which the task object is located, and output a candidate 2D box matching the region;

the ROI-ALIGN module is configured to extract, based on the region predicted by the RPN module, a feature of a region in which the candidate 2D box is located from a feature map provided by the backbone; and

the RCNN module is configured to: perform, through a neural network, convolution processing on the feature of the region in which the candidate 2D box is located, to obtain confidence that the candidate 2D box belongs to each object category, wherein the object category is an object category in the task corresponding to the parallel header; adjust coordinates of the candidate 2D box of the region through the neural network, so that an adjusted 2D candidate box more matches a shape of an actual object than the candidate 2D box does; and select an adjusted 2D candidate box whose confidence is greater than a preset threshold as a 2D box of the region.

3. The perception network according to claim 1 or 2, wherein the 2D box is a rectangular box.

4. The perception network according to claim 2, wherein
the RPN module is configured to predict, based on an anchor (Anchor) of an object corresponding to a task to which the RNP module belongs, a region in which the task object exists on the one or more feature maps provided by the backbone, to obtain a proposal, and output a candidate 2D box matching the proposal, wherein the anchor is obtained based on a statistical feature of the task object to which the anchor belongs, and the statistical feature comprises a shape and a size of the object.

5. The perception network according to any one of claims 1 to 4, wherein the RPN module is configured to predict, on the feature maps having different resolutions, regions in which objects having different sizes are located.

6. The perception network according to claim 5, wherein the RPN module is configured to detect of a region in which a large object is located on a low-resolution feature map, and detect of a region in which a small object is located on a high-resolution feature map.

7. An object detection method, wherein the method comprises:

receiving an input image;

performing convolution processing on the input image, and outputting feature maps, corresponding to the image; and

for different tasks, independently detecting a task object in each task based on the feature maps, and outputting a 2D box of a region in which each task object is located and confidence corresponding to each 2D box, wherein the task object is an object that needs to be detected in the task, and higher confidence indicates a higher probability that the task object corresponding to the task exists in the 2D box corresponding to the confidence;

extracting, based on a 2D box of the task object of the task, a feature of a region in which the 2D box is located from the one or more feature maps on the backbone, and predicting, based on the feature of the region in which the 2D box is located, 3D information, mask information, or keypoint information of the task object of the task.

8. The object detection method according to claim 8, wherein for different tasks, the independently detecting a task object in each task based on the feature maps, and outputting a 2D box of a region in which each task object is located and confidence corresponding to each 2D box comprises:

predicting, on one or more feature maps, the region in which the task object is located, and outputting a candidate 2D box matching the region;

extracting, based on the region in which the task object is located, a feature of a region in which the candidate 2D box is located from a feature map;

performing convolution processing on the feature of the region in which the candidate 2D box is located, to obtain confidence that the candidate 2D box belongs to each object category, wherein the object category is an object category in a task; and

adjusting coordinates of the candidate 2D box of the region through a neural network, so that an adjusted 2D candidate box more matches a shape of an actual object than the candidate 2D box does, and selecting an adjusted 2D candidate box whose confidence is greater than a preset threshold as a 2D box of the region.

9. The object detection method according to claim 7 or 8, wherein the 2D box is a rectangular box.

10. The object detection method according to claim 8, wherein the predicting, on one or more feature maps, the region in which the task object is located, and outputting a candidate 2D box matching the region is:
predicting, based on an anchor of an object corresponding to a task, a region in which the task object exists on the one or more feature maps provided by the backbone, to obtain a proposal, and outputting a candidate 2D box matching the proposal, wherein the anchor is obtained based on a statistical feature of the task object to which the anchor belongs, and the statistical feature comprises a shape and a size of the object.

11. The object detection method according to any one of claims 8 to 12, wherein detection of a region in which a large object is located is completed on a low-resolution feature, and detection of a region in which a small object is located is completed on a high-resolution feature map.

12. A computer product, wherein the computer product comprises a computer program; and when the computer program is run on an electronic device, the video splitting method is performed according to any one of claims 7 to 11.

13. An system, comprising at least one processor and a computer-readable storage medium that stores a computer program; wherein the processor is coupled to the computer-readable storage medium, and when the computer program is executed by the processor, the retransmission control method according to any one of claims 7 to 11 is implemented.

FIG. 1

FIG. 2

FIG. 3

FIG. 4

FIG. 5

FIG. 6A

EP 4 542 444 A1

EP 4 542 444 A1

CONT. FROM FIG. 6A

Input image

Parallel header 3 — RPN → ROI-ALIGN → RCNN → 2D BBOX (TrafficLight_Red/Yellow/Green/Black)

Parallel header 4 — RPN → ROI-ALIGN → RCNN → 2D BBOX (TrafficSign/GuideSign/BillBoard)

Parallel header 5 — RPN → ROI-ALIGN → RCNN → 2D BBOX (TrafficCone/TrafficStick/FireHydrant)

Parallel header 6 — RPN → ROI-ALIGN → RCNN → 2D BBOX (Motocycle/Bicycle)

Parallel header 7 — RPN → ROI-ALIGN → RCNN → 2D BBOX (RoadSign)

FIG. 6B

35

FIG. 7

FIG. 8

EP 4 542 444 A1

FIG. 9

FIG. 10

FIG. 11

FIG. 12A

FIG. 12B

FIG. 13A

Serial Mask_Header0

ROI-ALIGN

Feature of 2D object
M*14*14*256

Mask_Header
Res18-Conv5

M*7*7*512

Deconv

M*14*14*512

Conv

M*14*14*1

Mask output

TO
FIG. 13B

FIG. 13B

EP 4 542 444 A1

FIG. 14A

FIG. 14B

A method for training a full-type perception network based on some labeling data

Image 1 (task 0/1) (person and vehicle)

Image 2 (task 4) (TrafficSign)

Image 3 (task 4) (TrafficSign)

Image 4 (task 5) (TrafficCone/ TrafficStick)

Input image queue (including images of different tasks)

FIG. 15

FIG. 16

FIG. 17

EP 4 542 444 A1

FIG. 18

EP 4 542 444 A1

FIG. 19

FIG. 20

FIG. 21

2D proposal prediction

↓

2D proposal feature extraction

↓

2D proposal sub-classification

FIG. 22

2D proposal feature extraction

↓

3D centroid/orientation/ length/width/height prediction

FIG. 23

```
┌─────────────────────────────────┐
│                                 │
│   2D proposal feature extraction │
│                                 │
└─────────────────────────────────┘
                 │
                 ▼
┌─────────────────────────────────┐
│                                 │
│        Mask prediction          │
│                                 │
└─────────────────────────────────┘
```

FIG. 24

```
┌─────────────────────────────────┐
│                                 │
│   2D proposal feature extraction │
│                                 │
└─────────────────────────────────┘
                 │
                 ▼
┌─────────────────────────────────┐
│                                 │
│   Keypoint coordinate prediction │
│                                 │
└─────────────────────────────────┘
```

FIG. 25

FIG. 26

FIG. 27

FIG. 28

Apparatus for training a multi-task perception network

Task determining module — 2900

Data balancing module — 2904

Header determining module — 2901

Loss value calculation module — 2902

Adjustment module — 2903

FIG. 29

```
┌─────────────────────────────────────────┐
│         Receive an input image          │──── S3001
└─────────────────────────────────────────┘
                     │
                     ▼
┌─────────────────────────────────────────┐
│ Perform convolution processing on the   │──── S3002
│              input image                │
└─────────────────────────────────────────┘
                     │
                     ▼
┌─────────────────────────────────────────┐
│  Output a 2D box of a region in which   │──── S3003
│  each task object is located and        │
│  confidence corresponding to each 2D box│
└─────────────────────────────────────────┘
                     │
                     ▼
┌─────────────────────────────────────────┐
│  Predict 3D information, mask           │──── S3004
│  information, or keypoint information    │
│  of a task object of a task             │
└─────────────────────────────────────────┘
```

FIG. 30

Determine a task to which each image belongs ⸺ S3101

Perform data balancing on images that belong to different tasks ⸺ S31020

Determine a header that needs to be trained for each image ⸺ S3102

Calculate a loss value of the header that needs to be trained for each image ⸺ S3103

Perform gradient backhaul through the header that needs to be trained, and adjust, based on the loss value, parameters of the header that needs to be trained and a backbone ⸺ S3104

FIG. 31

Europäisches
Patentamt

European
Patent Office

Office européen
des brevets

# EUROPEAN SEARCH REPORT

Application Number

EP 24 20 4585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 108 520 229 A (MEGVII TECH LTD) 11 September 2018 (2018-09-11) * paragraph [0033] - paragraph [0155]; figures 1-10 * | 1-13 | INV. G06N3/04 G06V10/25 G06V10/82 G06V20/64 G06V30/24 G06V40/10 |
| Y | US 2019/057507 A1 (EL-KHAMY MOSTAFA [US] ET AL) 21 February 2019 (2019-02-21) * paragraph [0043] - paragraph [0104]; figures 1-7 * | 1-13 | |
| A | WO 2019/028725 A1 (INTEL CORP [US]; YAO ANBANG [CN] ET AL.) 14 February 2019 (2019-02-14) * page 2, line 19 - page 18, line 7; figures 1/7-7/7 * | 1-13 | |

| | TECHNICAL FIELDS SEARCHED (IPC) |
|---|---|
| | G06V G06K |

The present search report has been drawn up for all claims

| Place of search | Date of completion of the search | Examiner |
|---|---|---|
| The Hague | 6 March 2025 | Thibault, Guillaume |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.........................................................................................................
& : member of the same patent family, corresponding
   document

EPO FORM 1503 03.82 (P04C01)

**EP 4 542 444 A1**

## ANNEX TO THE EUROPEAN SEARCH REPORT
## ON EUROPEAN PATENT APPLICATION NO.

EP 24 20 4585

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | | Publication date | Patent family member(s) | | Publication date |
|---|---|---|---|---|---|
| CN 108520229 | A | 11-09-2018 | NONE | | |
| US 2019057507 | A1 | 21-02-2019 | CN | 109409371 A | 01-03-2019 |
| | | | KR | 20190019822 A | 27-02-2019 |
| | | | US | 2019057507 A1 | 21-02-2019 |
| WO 2019028725 | A1 | 14-02-2019 | US | 2020143205 A1 | 07-05-2020 |
| | | | WO | 2019028725 A1 | 14-02-2019 |

EPO FORM P0459

For more details about this annex : see Official Journal of the European Patent Office, No. 12/82